(19)

**Europäisches Patentamt**
**European Patent Office**
**Office européen des brevets**

(11) **EP 3 623 031 A1**

(12) **EUROPEAN PATENT APPLICATION**
published in accordance with Art. 153(4) EPC

(43) Date of publication:
**18.03.2020 Bulletin 2020/12**

(21) Application number: **18798531.2**

(22) Date of filing: **11.05.2018**

(51) Int Cl.:
$B01D\ 21/01^{(2006.01)}$     $C02F\ 1/52^{(2006.01)}$
$C02F\ 3/02^{(2006.01)}$     $C02F\ 11/12^{(2019.01)}$

(86) International application number:
**PCT/JP2018/018404**

(87) International publication number:
**WO 2018/207927 (15.11.2018 Gazette 2018/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.05.2017 JP 2017095806
09.05.2018 JP 2018090796**

(71) Applicant: **Miura, Seihachiroh
Tagajo-shi, Miyagi 985-0835 (JP)**

(72) Inventor: **Miura, Seihachiroh
Tagajo-shi, Miyagi 985-0835 (JP)**

(74) Representative: **V.O.
P.O. Box 87930
2508 DH Den Haag (NL)**

(54) **METHOD FOR TREATING WASTEWATER AND DEVICE FOR TREATING WASTEWATER FOR SAME**

(57) The present invention provides a method for treating wastewater and a device for treating wastewater for the same. A method for treatment of parlor wastewater/biomass liquid digestate is provided with, in a cleaning facility provided with at least a mixing tank - reaction tank - sludge dehydrator - (neutralization tank) - biological treatment tank: a step for adding a dewatering aid having a Mp value (moisture content evaluation) of Mp (cake moisture content) ≤ 55 to 55-70 to parlor wastewater/biomass liquid digestate, which is water to be treated, in the mixing tank; next, a step for adding a flocculant to the water to be treated in the reaction tank and forming floc that is extra-large (φ 10 mm or more) to large (φ 5 to 10 mm) and that includes the oil and fat portions and calcium contained in discarded milk or emulsified components and microparticle components contained in the biomass liquid digestate; a step for eliminating the floc with the sludge dehydrator and simultaneously separating into the supernatant liquid, from which the floc has been eliminated, and dehydrated cake with a moisture content of 55% or less or 55-70%; and next, a step for carrying out biological treatment by introducing the supernatant liquid into the biological treatment tank.

TREATMENT FLOW SHEET

PARLOR BUILDING

RAW WATER TANK

RESELBER ⟶ MIXING TANK

FLOCCULANT ⟶ REACTION TANK

SLUDGE DEWATERING MACHINE ⟶ DEWATERED CAKE·
TO COMPOSTING FACILITY

(EXCESS SLUDGE)

ADJUSTMENT TANK

NEUTRALIZATION TANK

(SLUDGE RETURN)

BIOLOGICAL TREATMENT TANK

MEMBRANE TREATMENT TANK

TREATED WATER TANK

DRAINAGE

F i g . 1

EP 3 623 031 A1

**Description**

[Technical Field]

The present invention relates to a method for treating wastewater such as parlor wastewater/biomass liquid digestate, and a device for treating wastewater therefor, and more particularly, to a method for treating the so-called parlor wastewater which is wastewater including drainage after washing milking devices and milking equipment in livestock industry, germicidal disinfectants, water used for washing floors of milking facility, detergents, cattle manure, and the like, a device for treating parlor wastewater for use in the treatment method, a method for treating the so-called biomass liquid digestate which is wastewater including a residue remaining after power generation at a biomass power generation facility and a device for treating the biomass liquid digestate (hereinafter can be also referred to as "wastewater") for use in the treatment method. The present invention provides a new technique and a new product relating to the method for treating wastewater such as the parlor wastewater/biomass liquid digestate and the wastewater treatment device therefor.

[Background Art]

In recent years, as the number of milk producers including milk farmers is reducing, milking facilities tend to become larger. As the "Law Concerning Appropriate Management and Promotion of Utilization of Livestock Excretion" has been put into operation since November 2004, wastewater purification treatment has become legally mandatory also with respect to the parlor wastewater. Accordingly, milk producers are obligated to purify the parlor wastewater to a level that allows the parlor wastewater to be discharged, and are actually required to install parlor wastewater purification facilities.

However, since milk waste, germicidal disinfectants, and the like, are mixed with parlor wastewater, purification thereof is difficult, and milk farmers and small and medium businesses could not heretofore design or install purification tanks. Therefore, in this industry, the need for installing a parlor wastewater treatment facility equipped with small-scale and efficient purification tank and equipment has increased with the increase in the scale of milking facilities.

Recently, there has been a movement to install purification tanks of smaller scale and higher efficiency, but since there are not a few cases where milk waste or germicidal disinfectant flows untreated into biological treatment tanks (aeration tanks), in reality, the biological treatment in the biological treatment tank (aeration tank) is not necessarily performed properly. In general, prior to the application of legislation concerning wastewater purification treatment to milking equipment and milking facilities in livestock industry, at aquatic product production facilities that are subject to the general discharge regulations under the Water Pollution Control Law, the purification treatment of seafood processing wastewater generated from aquatic product production facilities has already been implemented in accordance with the laws and regulations under the Water Pollution Control Law.

As prior art for aggregating and removing solid fractions from such seafood processing wastewater, for example, a method (PTL 1) using a powdery treatment agent consisting of a ferric chloride, polyferric chloride or aluminum sulfate as a flocculant, activated carbon, a zeolite or fly ash, and a polymeric surfactant has been proposed.

As another prior art, a method (PTL 2) in which a water-absorbing material is added to and mixed with froth-containing wastewater to gel the wastewater has been proposed. As yet another prior art, a method for separating and recovering fat in wastewater by dissolving in an organic solvent (PTL 3) has been proposed as a method for separating and recovering fat from these wastewaters.

In addition, as other prior art, a parlor wastewater treatment device for purifying by biological treatment and a method of treating parlor wastewater by using the device (PTL 4) have been proposed for treating parlor wastewater having a BOD of 1000 mg/L or less as water to be treated. As yet another prior art, a method for purifying parlor wastewater (PTL 5) characterized by using (A) dried bacterial cells to which a lipid has been attached, (b) a metal compound including a water-soluble metal salt and/or a metal oxide, and (c) a polymer flocculant has been proposed.

Biomass power generation, which is the target of the renewable energy fixed price purchase system (purchase period: 20 years) that started in 2012, tends to increase further with the expansion of renewable energy. However, as with nuclear power generation, there is a problem that residues remain after power generation is completed, and wastewater including the residues is called a biomass liquid digestate.

There are examples of development of post-filtration concentration and distillation techniques for processing the biomass liquid digestate, but there is no solid-liquid separation technique to be used therebefore, so currently the biomass liquid digestate is incinerated, used for restoration of soil or grassland, and the like. Here, the reason why the solid-liquid separation of biomass liquid digestate is impossible is that the liquid digestate is emulsified to form a stable emulsion and aggregation is difficult. Another reason is that the solid matter is decomposed, the particles become finer, the molecules associate with each other to form micelles, and a colloidal state is assumed, which makes it difficult to form flocs or dehydrate.

Here, the techniques for treating the biomass liquid digestate can be summarized as follows. For example, the following prior art techniques have been proposed: 1) a recycling system in which food waste, which is discharged from the food service industry, food production plants, and the like, is fermented with methane and the liquid digestate thereof and gas are used in order to efficiently recycle the food waste as feed, fuel, and the like (PTL 6), 2) an anaerobic treatment method in which soy sauce lees are almost completely decomposed by anaerobically digesting the water-diluted slurry of soy sauce lees (PTL 7), 3) a biomass fuel conversion system equipped with a methane fermentation tank for methane fermentation of biomass resource solubilized liquid, and a control method therefor (PTL 8), 4) a method for hydrothermally treating and recovering the residue and liquid digestate generated by methane fermentation treatment in order to use biomass resources with high efficiency (PTL 9), and the like.

In addition, as other prior art, for example, the following techniques have been proposed: 5) a method of treating liquid digestate including residues generated by methane fermentation of organic waste and biomass resources by introducing in an incinerator or a melting furnace, and treatment equipment therefor (PTL 10), 6) a grass-based biomass liquid digestate and a grass-based biomass digestion method (PTL 11), 7) a liquid digestate treatment system for separating and recovering, in a reusable form, solid components from liquid digestate generated in a biomass plant (PTL 12), and the like.

In general, 8) a method of treating with an iron salt or an aluminum salt that has an action of aggregation due to charge neutralization is used for separation of water-soluble proteins, and a method has been proposed in which a synthetic polymer flocculant is used to facilitate separation of fine flocs generated by such treatment from water and a pressure flotation separation method is used in order to solid-separate flocs thus aggregated (NPL 1).

In general, for example, when treating froth of seafood processing wastewater having greatly fluctuating composition, as in the conventional facility where seafood processing wastewaters are collected and jointly processed, it is almost impossible to dewater the aggregated flocs with a screw press. Therefore, a method of dewatering by scattering water by an evaporation process using a boiler is presently used, but problems associated with this method are that the cost is high, a large amount of $CO_2$ is discharged, and the environmental load is very large. Therefore, in this technical field, establishing a new low-environmental-load dewatering system that will replace the current dewatering system using the boiler evaporation process is an urgent problem which is strongly needed to be resolved.

Regarding the purification treatment of parlor wastewater/biomass power generation liquid digestate, for example, a purification treatment using a standard activated sludge method is presently the mainstream method for purifying the parlor wastewater/biomass liquid digestate to a level at which it can be discharged. However, in order to install purification equipment based on the activated sludge method, for example, it is necessary to install large-scale purification equipment including an adjustment pond, a biological treatment tank (aeration tank), a sedimentation pond, operation equipment therefor and the like, and in terms of operation expenses and running cost, such equipment is inefficient and not economical for installation by small and medium-sized businesses individually. Therefore, there has been a strong demand in the pertinent technical field to develop new purification techniques and purification facilities that are of smaller scale and more efficient and can be put into practical use.

[Citation List]

[Patent Literature]

[PTL 1] Japanese Patent Application Publication No. H09-10508
[PTL 2] Japanese Patent Application Publication No. 2000-154378
[PTL 3] Japanese Patent Application Publication No. 2003-290604
[PTL 4] Japanese Patent Application Publication No. 2007-75710
[PTL 5] Japanese Patent Application Publication No. 2010-240582
[PTL 6] Japanese Patent Application Publication No. 2003-88838
[PTL 7] Japanese Patent Application Publication No. 2005-6649
[PTL 8] Japanese Patent Application Publication No. 2007-313427
[PTL 9] Japanese Patent Application Publication No. 2008-43902
[PTL 10] Japanese Patent Application Publication No. 2008-221105
[PTL 11] Japanese Patent Application Publication No. 2012-16652
[PTL 12] Japanese Patent Application Publication No. 2016-10742

[Non Patent Literature]

[NPL 1] "Waste Treatment/Recycling Technology Handbook". Edited by the Waste Treatment/Recycling Technology Handbook Editorial Committee, published by the Construction Industry Research Committee, Inc., 25 November 1993, p. 407, left column, lines 9 to 32

[Summary of Invention]

[Technical Problem]

In the process of conducting various studies on the purification treatment of parlor wastewater, the inventor of the present invention has heretofore established that since in the parlor wastewater, molecules of milk components, fats and, the like, in milk waste associate with each other to emulsify water and oil and form a stable emulsion state, it is very difficult to form flocs of a suitable size and to remove/dehydrate the flocs, even by adding ordinary dewatering aids or flocculants and, therefore, there are actually many cases where the milk waste and disinfectants flow untreated into the aeration tank. That is, in the conventional technique known in the art, even when an ordinary dewatering aid or flocculant is added to a contaminated waste liquid including milk waste to generate (form) flocs, it is technically very difficult to reduce the moisture content of the residual cake to 70% or less, and the reality is that this problem is very difficult to solve.

In addition, in the process of conducting various studies on the purification treatment of biomass power generation liquid digestate (hereinafter sometimes referred to as "biomass liquid digestate"), the inventor of the present invention has established that, since the biomass liquid digestate is emulsified and forms a stable emulsion state, it is impossible to perform solid-liquid separation and it is very difficult to remove/dehydrate the digestate and, therefore, there are actually many cases where the biomass liquid digestate flows untreated into the biological treatment tank (aeration tank).

That is, in the conventional technique known in the art, even when an ordinary dewatering aid or flocculant is added to a contaminated waste liquid including the liquid digestate to generate (form) flocs, it is technically very difficult to reduce the moisture content of the residual cake to 70% or less, and the reality is that this problem is very difficult to solve.

With such a situation in view, the inventor of the present invention focused attention on fats and also calcium in the milk waste, and has found that, in order to remove the fats and calcium before they flow into the biological treatment tank (aeration tank), a specific dewatering aid having a Mp value (Moisture percentage value) of Mp $\leq$ 70 is combined with a flocculant, and in a purification facility equipped with at least a mixing tank, a reaction tank, a sludge dewatering machine, a neutralization tank, and a biological treatment tank (aeration tank), the following steps: in the mixing tank, adding the specific dewatering aid to water to be treated ; then, in the reaction tank, adding the flocculant to the water to be treated to form extra-large ($\phi$ 10 mm or more) to large ($\phi$ 5 to 10 mm) flocs (flock) that include the fats and also calcium in milk waste; and in the sludge dewatering machine, separating into a highly transparent separated liquid from which the flocs have been removed and a dewatered cake with a moisture content of 70% or less are used, and then by loading the separated liquid into the biological treatment tank (aeration tank) to perform biological treatment, it is possible to achieve a stable water treatment effect by reducing a BOD volumetric load, reducing the sludge generation amount, and reducing the amount of required oxygen and to perform the biological treatment in the biological treatment tank (aeration tank) with high efficiency. This finding led to the creation of the present invention.

The inventor of the present invention has also found that, in order to remove an emulsified component and a fine particle component of a biomass liquid digestate before the emulsified component and the fine particle component flow into the biological treatment tank (aeration tank), a specific dewatering aid having a Mp value (Moisture percentage value; moisture content evaluation) of Mp (cake moisture content) $\leq$ 70 is combined with a flocculant suitable for the dewatering aid, and in a purification facility equipped with at least the mixing tank, a reaction tank, a sludge dewatering machine, (a neutralization tank), and a biological treatment tank (aeration tank), the following steps: in the mixing tank, adding the specific dewatering aid to water to be treated; then, in the reaction tank, adding the flocculant to the water to be treated to form extra-large ($\phi$ 10 mm or more) to large ($\phi$ 5 to 10 mm) flocs (flock); and in the sludge dewatering machine, separating into a highly transparent separated liquid from which the flocs have been removed and a dewatered cake with a moisture content of 70% or less are used, and then by loading the separated liquid into the biological treatment tank (aeration tank) to perform biological treatment, it is possible to achieve a stable water treatment effect achieved as a result of reducing the BOD volumetric load, reducing the sludge generation amount, and reducing the amount of required oxygen and to perform the biological treatment in the biological treatment tank (aeration tank) with high efficiency. This finding led to the creation of the present invention.

In the present invention, the "specific dewatering aid having a Mp value (Moisture percentage value; moisture content evaluation) of Mp (cake moisture content) $\leq$ 70" is defined as a dewatering aid demonstrating the performance of forming extra-large ($\phi$ 10 mm or more) to large ($\phi$ 5 to 10 mm) flocs when the dewatering aid and a flocculant are added to parlor water/biomass liquid digestate, which is water to be treated, and a presumed (expected) performance of separating into separated liquid from which the flocs have been removed and a dewatered cake with a moisture content of 70% or less, that is, the performance of dewatering to the cake moisture content of 55% or less to 55% to 70%.

In the present invention, in order to conduct a dewatering test, in a purification facility equipped with at least a mixing tank, a reaction tank, a sludge dewatering machine, (a neutralization tank), and a biological treatment tank (aeration tank), when various dewatering aids and flocculants were added to the water to be treated in the mixing tank and the reaction tank, as shown in Table 5 or Table 15 described hereinbelow, where the floc and cake dewatering rate was evaluated, the results obtained for the transparency of the separated liquor (supernatant liquor) from which the flocs have been removed were "turbid → transparent"; the results obtained for the size of the flocs (flock) formed in the reaction tank were E → A, that is, E: no flocs, D: small ($\phi$ 3 mm or less), C: medium ($\phi$ 3 to 5 mm), B: large ($\phi$ 5 to 10 mm), and A: extra-large ($\phi$ 10 mm or more); and the results obtained for the presumed (expected) cake moisture content generated from the sludge dewatering machine were E → A, that is, E: 90% or more, D: 80% to 90%, C: 70% to 80%, B: 55% to 70%, and A: 55% or less.

In the present invention, it is assumed that in the evaluation of the presumed (expected) cake moisture content of the dewatered cake, the numerical values of E to A in the "evaluation" section of Table 5 or Table 15 described herein are defined as "Mp value (Moisture percentage value; moisture content evaluation)". Further, in the present invention, it is assumed that in the evaluation of performance of the dewatering aid, for example, the cake moisture content of the dewatered cake, where the presumed (expected) cake moisture content is, for example, 55% or less, it indicates that the dewatering aid has the performance of "Mp (cake moisture content) $\leq$ 55", and where the presumed (expected) cake moisture content is 55% to 70%, it indicates that the dewatering aid has the performance of "Mp (cake moisture content) = 55 to 70".

It is an object of the present invention to provide a method of treating a biomass liquid digestate that includes using the specific dewatering aid together with a flocculant suitable for the dewatering aid to form extra-large ($\phi$ 10 mm or more) to large ($\phi$ 5 to 10 mm) flocs that include fats and also calcium in milk waste/flocs of the biomass liquid digestate, and separating into a separated liquid from which the flocs have been removed and a dewatered cake having a moisture content of 70% or less, more specifically, a moisture content of 55% or less to 55% to 70%, by removal/dewatering of the flocks, thereby making it possible to expect a stable water treatment effect as a result of reducing a BOD volumetric load, reducing the sludge generation amount, and reducing the amount of required oxygen and to perform the biological treatment in the biological treatment tank (aeration tank).

Another object of the present invention to provide a method of treating parlor water/biomass liquid digestate in which by using the specific dewatering aid together with a flocculant suitable for the dewatering aid, it is possible to form extra-large ($\phi$ 10 mm or more) to large ($\phi$ 5 to 10 mm) flocs in a reaction tank, and to reduce the moisture content of the dewatered cake to 70% or less, more specifically, to a moisture content of 55% or less to 55% to 70%, thereby making it possible to perform the biological treatment in the biological treatment tank (aeration tank), and also to provide a device for treating wastewater for the method.

[Solution to Problem]

The present invention includes the following technical means for solving the above-described problems.

(1) A method for treating wastewater, comprising the steps of:

adding a specific dewatering aid having a Mp value (Moisture percentage value; moisture content evaluation) of Mp (cake moisture content) $\leq$ 55 to Mp (cake moisture content) = 55 to 70 and a flocculant having a floc (Flock: floc-like precipitate) forming ability to wastewater which is water to be treated, to form extra-large ($\phi$ 10 mm or more) to large ($\phi$ 5 to 10 mm) flocs;

separating the wastewater into separated liquid from which the flocs have been removed and a dewatered cake with a moisture content of 55% or less to 55% to 70%; and

then, loading the separated liquid into a biological treatment tank (aeration tank) to perform biological treatment.

(2) The method for treating wastewater according to clause (1) hereinabove, wherein the wastewater is parlor wastewater or a biomass liquid digestate.

(3) The method according to clause (2) hereinabove, in a purification facility equipped with at least a mixing tank, a reaction tank, a sludge dewatering machine, (a neutralization tank), and a biological treatment tank, the method comprising the steps of:

in the mixing tank, adding the specific dewatering aid to the parlor wastewater/biomass liquid digestate which is water to be treated;

then, in the reaction tank, adding the flocculant having the floc forming ability to the water to be treated to form extra-large ($\phi$ 10 mm or more) to large ($\phi$ 5 to 10 mm) flocs including fats and calcium contained in milk waste/flocs including an emulsified component and a fine particle component contained in the biomass liquid digestate;

in the sludge dewatering machine, removing the flocs and simultaneously separating the parlor wastewater/biomass liquid digestate into separated liquid from which the flocs have been removed and a dewatered cake with a moisture content of 55% or less to 55% to 70%; and

then loading the separated liquid into the biological treatment tank (aeration tank) to perform biological treatment.

(4) The method according to any one of clauses (2) to (3) hereinabove, comprising the steps of:

adding a dewatering aid having a Mp value (moisture content evaluation) of Mp (cake moisture content) = 55 to 70 and a flocculant having a floc forming ability to form large ($\phi$ 5 to 10 mm) flocs;

separating into separated liquid from which the flocs have been removed and a dewatered cake having a moisture content of 55% to 70%; and

then, loading the separated liquid into the biological treatment tank (aeration tank) to perform biological treatment.

(5) The method according to any one of clauses (2) to (4) hereinabove, wherein an operation of removing the flocs including fats and calcium contained in the milk waste/flocs including an emulsified component and a fine particle component contained in the biomass liquid digestate is performed before the water to be treated flows into the biological treatment tank.

(6) The method according to any one of clauses (2) to (4) hereinabove, wherein an operation of neutralizing a disinfectant is performed in the neutralization tank, if necessary, before the water to be treated flows into the biological treatment tank (aeration tank).

(7) The method according to any one of clauses (2) to (4) hereinabove, wherein the dewatering aid is added at 0.1% or less (vs. wastewater volume) to the parlor wastewater/biomass liquid digestate, which is the water to be treated, in the mixing tank.

(8) The method according to any one of clauses (2) to (4) hereinabove, wherein the flocculant is added at 1% or less (0.2% aqueous solution) to the parlor wastewater/biomass liquid digestate which is the water to be treated, in the reaction tank.

(9) A device for treating wastewater for use in the method for treating wastewater according to any one of clauses (1) to (8) hereinabove, the device including, as a constituent component, a purification facility equipped with at least a mixing tank, a reaction tank, a sludge dewatering machine, (a neutralization tank), and a biological treatment tank, wherein the following steps:

1) in the mixing tank, adding a dewatering aid having a Mp value (moisture content evaluation) of Mp (cake moisture content) $\leq$ 55 to Mp (cake moisture content) = 55 to 70 to parlor wastewater/biomass liquid digestate which is water to be treated;

2) in the reaction tank, adding a flocculant having a floc forming ability to the water to be treated to form extra-large ($\phi$ 10 nm or more) to large ($\phi$ 5 to 10 mm) flocs including fats and calcium contained in the milk waste/flocs including an emulsified component and a fine particle component contained in the biomass liquid digestate; and

3) in the sludge dewatering machine, separating into separated liquid from which the flocs have been removed and a dewatered cake with a moisture content of 55% or less to 55% to 70%

are performed, thereby loading the separated liquid into the biological treatment tank (aeration tank) to perform biological treatment.

(10) The device for treating wastewater according to clause (9) hereinabove, wherein the following steps:

1) in the mixing tank, adding a dewatering aid having an Mp value (moisture content evaluation) of Mp (cake moisture content) = 55 to 70 to parlor wastewater/biomass liquid digestate which is water to be treated;

2) in the reaction tank, adding a flocculant to the water to be treated to form large ($\phi$ 5 to 10 mm) flocs including fats and calcium contained in the milk waste/flocs including an emulsified component and a fine particle component contained in the biomass liquid digestate; and

3) in the sludge dewatering machine, separating into separated liquid from which the flocs have been removed and a dewatered cake with a moisture content of 55% to 70%

are performed, thereby loading the separated liquid into the biological treatment tank (aeration tank) to perform biological treatment.

Next, the present invention will be described in greater detail.

Parlor wastewater that is the object to be treated in the present invention means wastewater generated from milking facilities that includes washing drainage from milking devices and milking equipment, germicidal disinfectants, water used for washing floors of milking facilities, detergents, cattle manure, and the like. A biomass liquid digestate that is also the object to be treated in the present invention means wastewater including a residue remaining after power generation at a biomass power generation facility and generated from the facility. Regarding the parlor wastewater/biomass liquid digestate, in the pertinent technical field, there were many problems due to the fact that biological treatment (purification treatment) in a biological treatment tank (aeration tank) cannot be effectively performed because the parlor wastewater/biomass liquid digestate flows untreated into the biological treatment tank (aeration tank).

In addition, in the purification of parlor wastewater, molecules of milk components, fats and calcium contained at a high concentration in milk waste associate with each other to form micelle and a colloid state. For this reason, with the known conventional techniques, it is particularly difficult to form flocs with a size from extra-large ($\phi$ 10 mm or more) to large ($\phi$ 5 to 10 mm) in the reaction step implemented in the reaction tank. Furthermore, it is very difficult to perform an operation of separating a dewatered cake and separated liquid in the step of floc removal/dewatering performed with the sludge dewatering machine, and it is also very difficult to separate into the separated liquid from which extra-large ($\phi$ 10 mm or more) to large ($\phi$ 5 to 10 mm) flocs have been removed and the dewatered cake with a moisture content of 70% or less, that is, a moisture content of 55% or less to 55% to 70%. Accordingly, there has been a strong demand in the pertinent technical field to develop a method for efficient purification treatment of parlor water.

In addition, in the purification of a biomass liquid digestate, the liquid digestate is emulsified and forms a stable emulsion state which makes the aggregation difficult. In addition, the solid matter is decomposed, the particles become finer, the molecules associate with each other to form micelles, and a colloidal state is formed. For this reason, with the known conventional techniques, it is particularly difficult to form flocs with a size from extra-large ($\phi$ 10 mm or more) to large ($\phi$ 5 to 10 mm) in the reaction step implemented in the reaction tank. Furthermore, it is very difficult to perform an operation of separating a dewatered cake and separated liquid in the step of floc removal/dewatering performed with the sludge dewatering machine, and it is also very difficult to separate into the separated liquid from which extra-large ($\phi$ 10 mm or more) to large ($\phi$ 5 to 10 mm) flocs have been removed and the dewatered cake with a moisture content of 70% or less, that is, a moisture content of 55% or less to 55% to 70%. Accordingly, there has been a strong demand in the pertinent technical field to develop a method for efficient purification treatment of biomass liquid digestate.

In the course of heretofore conducted comprehensive research and development of methods for treating froth of seafood processing wastewater and parlor wastewater, the inventor of the present invention has focused attention on fats and also calcium contained in milk waste in order to treat the parlor wastewater generated from milking facilities and has gained new information. Thus, in order to remove the fats and calcium before they flow into a biological treatment tank (aeration tank), by using a specific dewatering aid and a flocculant, forming extra-large ($\phi$ 10 mm or more) to large ($\phi$ 5 to 10 mm) flocs in a reaction tank, and then performing floc removal/dewatering in a sludge dewatering machine, it is possible to separate into a highly transparent separated liquid from which the extra-large ($\phi$ 10 mm or more) to large ($\phi$ 5 to 10 mm) flocs have been removed and a dewatered cake with a moisture content of 70% or less in the sludge dewatering machine, and by allowing thereafter the separated liquid to flow into the biological treatment tank (aeration tank) and performing the biological treatment, it is possible to perform highly efficient and highly accurate biological treatment.

In the course of heretofore conducted comprehensive research and development of methods for treating froth of seafood processing wastewater and parlor wastewater, the inventor of the present invention has focused attention on the emulsified component and fine particle component of a biomass liquid digestate in order to treat the biomass liquid digestate generated from biomass power generation facilities and has gained new information. Thus, in order to remove the emulsified component and fine particle component before they flow into a biological treatment tank (aeration tank), by using a specific dewatering aid and a flocculant suitable for the dewatering aid, forming extra-large ($\phi$ 10 mm or more) to large ($\phi$ 5 to 10 mm) flocs in a reaction tank, and then performing floc removal/dewatering in a sludge dewatering machine, it is possible to separate into a highly transparent separated liquid from which the extra-large ($\phi$ 10 mm or more) to large ($\phi$ 5 to 10 mm) flocs have been removed and a dewatered cake with a moisture content of 70% or less in the sludge dewatering machine, and by allowing thereafter the separated liquid to flow into the biological treatment tank (aeration tank) and performing the biological treatment, it is possible to perform highly efficient and highly accurate biological treatment.

Parlor wastewater is a waste liquid in which molecules of milk components, fats, calcium, and the like, contained in milk waste associate with each other to form micelles and are emulsified and dispersed in the form of fine particles to form a colloid state in the wastewater, and at the same time, the parlor water is complexly and integrally contaminated with germicidal disinfectants, washing drainage, livestock excreta and the like. Further, biomass liquid digestate is a waste liquid in which molecules of emulsified components, fine particle components, and the like, associate with each other to form micelles and are emulsified and dispersed in the form of fine particles to form a colloid state in the biomass liquid digestate (wastewater), and at the same time, the biomass liquid digestate is complexly and integrally contaminated with sludge including washing drainage, fine particle components, and the like. For this reason, even when floc removal/dewatering is performed with a sludge dewatering machine, it is extremely difficult to obtain a dewatered cake with a moisture content of 70% or less, especially 55% or less, and it is very difficult to efficiently purify the parlor wastewater/biomass liquid digestate with a simple equipment at a low cost, that is, without using the conventional large-scale sophisticated equipment.

Therefore, in the present invention, in order to treat parlor wastewater that is complexly and integrally contaminated with milk waste, detergents, washing drainage, germicidal disinfectants, excreta, and the like, the attention was focused on fats and calcium contained in milk waste, and in order to remove the fats and calcium before they flow into the biological treatment tank (aeration tank), an attempt was made to purify the water to be treated by using a specific dewatering aid together with a flocculant to form flocs, and removing the flocs/performing dewatering. Further, in the present invention, in order to treat a biomass liquid digestate including wastewater that is complexly and integrally contaminated with sludge including washing drainage, fine particle components, and the like, the attention was focused on emulsified components and fine particle components in the liquid digestate, and in order to remove the emulsified components and fine particle components before they flow into the biological treatment tank (aeration tank), an attempt was made to purify the water to be treated by using a specific dewatering aid together with a flocculant suitable for the dewatering aid to form flocs, and removing the flocs/performing dewatering.

That is, the present invention is characterized in that in a purification facility equipped with at least a mixing tank, a reaction tank, a sludge dewatering machine, (a neutralization tank), and a biological treatment tank, a dewatering aid having a Mp value (moisture content evaluation) of Mp (cake moisture content) $\leq 70$, more specifically Mp (cake moisture content) $\leq 55$ to Mp (cake moisture content) = 55 to 70 is added to the water to be treated, in the mixing tank, then a flocculant suitable for the dewatering aid, for example, a polymer flocculant, is added to the water to be treated, in the reaction tank, to form extra-large ($\phi$ 10 mm or more) to large ($\phi$ 5 to 10 mm) flocs including fats and calcium contained in the milk waste/flocs including an emulsified component and a fine particle component contained in the biomass liquid digestate, separation is performed into separated liquid from which the flocs have been removed and a dewatered cake with a moisture content of 70% or less, more specifically, a moisture content of 55% or less to 55% to 70% in a sludge dewatering machine, and then the separated liquid is loaded into the biological treatment tank to perform biological treatment (purification treatment) in the biological treatment tank (aeration tank) with good efficiency.

In the present invention, the relationship between floc formation in the reaction tank, floc removal in the dewatering step, and cake moisture content is extremely important. The results of the dewatering test have demonstrated, as shown in Table 5 and Table 15 to be described later, that when the cake moisture content is 90% or more, flocs cannot be formed, when the cake moisture content is 80% to 90%, the size of the flocs is small ($\phi$ 3 mm or less), when the cake moisture content is 70% to 80%, the size of the flocs is medium ($\phi$ 3 to 5 mm), when the cake moisture content is 55% to 70%, the size of the flocs is large ($\phi$ 5 to 10 mm), and when the cake moisture content is 55% or less, the size of the flocs is extra-large ($\phi$ 10 mm or more). Further, it was also established that in the same order, for example, the transparency of the supernatant liquor changes as turbid $\rightarrow$ transparent, and the evaluation rank is changes as E $\rightarrow$ A. Furthermore, it was established that the test results greatly depend on the selection of the type of the dewatering aid to be added in the mixing tank and the selection of the type of the flocculant to be added in the reaction tank, in particular, on the former, that is, the selection of the type of the dewatering aid to be added in the mixing tank.

By conducting a series of tests that by far exceeded the scope of normal routine studies, the inventor of the present invention has obtained, for the first time, a water-treatment result (effect) including a moisture content of the dewatered cake of 70% or less, more specifically, a moisture content of 55% or less to 55% to 70%, extra-large ($\phi$ 10 mm or more) to large ($\phi$ 5 to 10 mm) flocs, and high transparency of supernatant liquor, in a purification facility equipped with at least a mixing tank, a reaction tank, a sludge dewatering machine, (a neutralization tank), and a biological treatment tank (aeration tank), by using the following steps: adding a dewatering aid having a Mp value (moisture content evaluation) of Mp (cake moisture content) $\leq 70$, more specifically, Mp (cake moisture content) $\leq 55$ to Mp (cake moisture content) = 55 to 70 in a mixing tank, and then adding a flocculant suitable for the dewatering aid, for example, a polymer flocculant, to the water to be treated, in the reaction tank, to form flocs including fats and calcium contained in milk waste/flocs including an emulsified component and a fine particle component contained in biomass liquid digestate. The biological treatment was then successfully implemented with good efficiency by removing the flocs in a sludge dewatering machine and, at the same time, loading the highly transparent separated liquid from which the flocs have been removed into the biological treatment tank (aeration tank).

Here, the formation of flocs including fats and calcium contained in the milk waste/flocs including an emulsified component and a fine particle component contained in the biomass liquid digestate, which was realized as a result of using a specific dewatering aid together with a flocculant suitable for the dewatering aid, and the removal of the flocs/dewatering will be further explained in greater detail. In the present invention the formation of flocs and the removal of the flocs/dewatering have the following meaning. Thus, in a purification facility equipped with at least a mixing tank, a reaction tank, a sludge dewatering machine, (a neutralization tank), and a biological treatment tank (aeration tank), a specific dewatering aid having a Mp value (moisture content evaluation) of Mp (cake moisture content) $\leq 70$, more specifically, Mp (cake moisture content) $\leq 55$ to Mp (cake moisture content) = 55 to 70 is added to the mixing tank, stirring is performed, for example, at 500 rpm $\times$ 2 min, and then a flocculant suitable for the dewatering aid, for example, a polymer flocculant, is added and stirring is performed, for example, at 120 rpm $\times$ 3 min, to form flocs including fats and calcium contained in milk waste/flocs including an emulsified component and a fine particle component contained in biomass liquid digestate.

The flocs are then loaded in the sludge dewatering machine, removal of the flocs including an emulsified component and a fine particle component contained in biomass liquid digestate and dewatering are performed, a separated liquid and a dewatered case are separated, the moisture content of the dewatered cake is reduced to 70% or less, more specifically, to a moisture content of 55% or less to 55% to 70%, and the separated liquid is thereafter biologically treated in the biological treatment tank (aeration tank).

In the present invention, for example, a dewatering aid mainly composed of a pulverized product having a particle size of 1 to 100 $\mu$m which is obtained by pulverizing vegetable fibers by mechanical shearing can be used as the specific dewatering aid, and a polymer flocculant (commercially available product) suitable for the dewatering aid can be used as the flocculant. Here, "mainly composed of a pulverized product having a particle size of 1 to 100 $\mu$m which is obtained by pulverizing vegetable fibers by mechanical shearing" means that the pulverized product having a particle size of 1 to 100 $\mu$m is contained at at least 50% by mass or more (that is, half or more). Examples of the vegetable fibers that are the main component of the dewatering aid include coniferous or broad-leaved wood powder, powder of bamboo which is a monocotyledonous plant with lignified culm, thinned wood chips, pulverized woodwork chips, or sawdust and waste generated during lumbering, grinding waste generated by sanding, cutting waste generated by sandblasting, papermaking pulp, and wastepaper pulp. However, these are not limiting, and any raw material (raw substance) including vegetable fibers can be used, as appropriate, regardless of the type.

It is preferable that cellulose fibers with a purity increased, desirably, to 90% or more be used as these vegetable fibers. There are about 40 or more commercially available dewatering aids mainly composed of pulverized products having a particle size of 1 to 100 $\mu$m that are obtained by pulverizing such vegetable fibers by mechanical shearing. For example, "Reselber MT Series" (manufactured by Reselber Co., Ltd.) can be procured, as appropriate, by designating a product number.

In the present invention, the "vegetable fiber" that is the main component of the dewatering aid is exemplified by pulverized chaff, straw, ground corn cob, cellulose fiber, fine wood flour, and the like, and a pulverized product (sample) that is obtained by finely pulverizing these vegetable fibers by mechanical shearing, for example, to a particle size of 1 to 100 $\mu$m by pulverizing or grinding by using a crusher or the like can be advantageously used as the vegetable fibers. However, the dewatering aid that can be used in the present invention is not limited to these products, and any sample having a Mp value (moisture content evaluation) of Mp (cake moisture content) $\leq$ 55 to Mp (cake moisture content) = 55 to 70, that is, a sample having ranks A to B in the evaluation section of Table 5 described hereinbelow, can be used in the same manner.

In the present invention, the specific dewatering aid such as pulverized chaff can be used by adding to a mixing tank in a purification facility equipped with at least the mixing tank - reaction tank - sludge dewatering machine - (neutralization tank) - biological treatment tank in the state of a sample mainly composed of a pulverized product having a particle size of 1 to 100 $\mu$m. In order to treat parlor wastewater/biomass liquid digestate with the specific dewatering aid, for example, the specific dewatering aid is added at 0.1% (vs. the raw water volume) to the raw water (wastewater before treatment) in the mixing tank, and then a flocculant suitable for the dewatering aid, for example, an organic polymer flocculant (for example, 0.2% by mass aqueous solution) is added in the reaction tank. A nonionic, cationic or amphoteric synthetic polymer flocculant can be used as the organic polymer flocculant.

Examples of the nonionic synthetic polymer flocculant include polyacrylamide, polyethylene oxide, urea-formalin resin, and the like. Examples of the cationic synthetic polymer flocculant include polyaminomethylacrylamide, polyvinyl imidazoline, chitosan, ionene copolymers, epoxyamine copolymers and the like. Examples of amphoteric synthetic polymer flocculants include lecithin-based amphoteric surfactants, casein degradation product-based amphoteric surfactants and the like. These organic polymer flocculants can be appropriately obtained as, for example, commercially available products (manufactured by Asada Chemical Industry Co., Ltd., HYMO Corporation, and the like.). In the present invention, inorganic flocculants such as iron (III) polysulfate, iron (III) polychloride, aluminum polychloride, aluminum polysulfate, ferric chloride, aluminum sulfate or the like can be used as the flocculant suitable for the dewatering aid, and an appropriate flocculant can be used as long as the flocculant is compatible with the specific dewatering aid.

When implementing the purification treatment of the parlor wastewater/biomass liquid digestate of the present invention, the order of adding the specific dewatering aid and a flocculant suitable for the dewatering aid, for example, an organic polymer flocculant, is important. In a purification facility equipped with at least a mixing tank, a reaction tank, a sludge dewatering machine, (a neutralization tank), and a biological treatment tank (aeration tank), the specific dewatering aid is added in the mixing tank of the initial stage, and where a flocculant suitable for the dewatering aid, for example, an organic polymer flocculant, is then added in the reaction tank and stirring is performed, flocs are generated (formed). After sufficient floc formation, squeezing treatment is implemented with the sludge dewatering machine. The time required for the generation (formation) of the flocs is usually about 5 to 15 min.

After sufficient floc formation, squeezing is performed, for example, with a screw press or a belt press or by pressure filtration, a separated liquid and a dewatered cake are separated, and the dewatered cake is taken out. In the present invention, the attention is focused on fats and calcium contained in milk waste and also on an emulsified component and a fine particle component contained in a biomass liquid digestate, and in a purification facility equipped with at least a mixing tank, a reaction tank, a sludge dewatering machine, (a neutralization tank), and a biological treatment tank (aeration tank), a dewatering aid having a Mp value (moisture content evaluation) of Mp (cake moisture content) ≤ 70, for example, a dewatering aid mainly composed of a pulverized product having a particle size of 1 to 100 μm which has been obtained by pulverizing vegetable fibers by mechanical shearing, is added to the water to be treated in the mixing tank, and then a flocculant suitable for the dewatering aid, for example, a polymer flocculant, is added to the water to be treated in the reaction tank to form flocs including fats and calcium contained in the milk waste/flocs including the emulsified component and fine particle component contained in the biomass liquid digestate.

Then, in the sludge dewatering machine, the extra-large (φ 10 mm or more) to large (φ 5 to 10 mm) flocs are removed and, at the same time, the separated liquid from which the flocs have been removed and the dewatered cake with a moisture content of 70% or less are separated, and neutralization of a disinfectant is implemented, if necessary, at the same time in the neutralization tank. The separated liquid is then loaded into the biological treatment tank (aeration tank) and biological treatment is implemented. In the present invention, the formation of extra-large (φ 10 mm or more) to large (φ 5 to 10 mm) flocs and the separation into the separated liquid from which the flocs have been removed and the dewatered cake with a moisture content of 70% or less are important, and only when all these conditions are satisfied, the biological treatment in the biological treatment tank (aeration tank) can be performed efficiently.

In the present invention, as shown in the examples described hereinbelow, specific commercially available products (product numbers: RB-PT, PB-C1805, and the like) were selected for the flocculant from about 30 types of commercially available flocculants. In the present invention, the selection of "dewatering aid" is the most important among the selection of dewatering aid and flocculant, and for the "flocculant", any advantageous flocculant suitable for the specific dewatering aid may be selected for use on the basis of A to E, which are the highest rank to the lowest rank, in floc determination (supernatant liquor, size, hardness, tightness).

In the present invention, when it is impossible to form extra-large (φ 10 mm or more) to large (φ 5 to 10 mm) flocs and separate into the separated liquid from which the flocs have been removed and the dewatered cake with a moisture content of 70% or less, it is difficult to expect a stable water treatment effect achieved as a result of reducing the BOD volume load, reducing the amount of generated sludge, and reducing the amount of required oxygen even if the parlor wastewater/biomass liquid digestate is biologically treated in a biological treatment tank (aeration tank). Therefore, good results cannot be obtained in the evaluation of supernatant liquor and the evaluation of flocs (size, hardness, tightness), the biological treatment in the biological treatment tank (aeration tank) is not successful, and it becomes impossible to configure a method of treating parlor wastewater/biomass liquid digestate and a wastewater treatment device therefor that satisfy the general drainage standards established by the Water Pollution Control Law.

[Advantageous Effects of Invention]

According to the present invention, the following special effects are exhibited.

(1) In the present invention, the attention is focused on fats and calcium contained in parlor wastewater including washing water and disinfectant of milking equipment, water washed away from the floor of the milking facility, washing drainage, cow manure, milk waste, and the like, in particular, the milk waste, in order to remove the fats and calcium efficiently before the fats and calcium flow into a biological treatment tank (aeration tank), a specific dewatering aid and a flocculant are used in combination so that the formation of flocs including the fats and calcium contained in the milk waste, floc removal/dewatering and neutralization of disinfectant in the neutralization tank are performed simultaneously, thereby making it possible to implement the biological treatment in the biological treatment tank (aeration tank).
(2) By using the specific dewatering aid and the flocculant in combination, it is possible to drain the parlor wastewater in a form that satisfies the general drainage standards established by the Water Pollution Control Law.
(3) A method for efficiently biologically treating parlor wastewater and a wastewater treatment device (facility) therefor can be provided.
(4) In the present invention, the attention is focused, in particular, on an emulsified component and a fine particle component contained in a biomass liquid digestate including residues remaining after power generation at a biomass power generation facility, a specific dewatering aid and a flocculant are used in combination in order to remove the emulsified component and the fine particle component efficiently before the emulsified component and the fine particle component flow into a biological treatment tank (aeration tank), flocs including the emulsified component and the fine particle component contained in the biomass liquid digestate are formed, floc removal/dewatering is performed, and neutralization of disinfectant is simultaneously performed, if necessary, in the neutralization tank, thereby making it possible to implement the biological treatment in the biological treatment tank (aeration tank).
(5) By using the specific dewatering aid and the flocculant suitable for the dewatering aid in combination, it is possible to drain the biomass liquid digestate in a form that satisfies the general drainage standards established by the Water Pollution Control Law.

(6) A dewatered cake which is generated as a residue and which has a moisture content of 70% or less, more specifically, a moisture content of 55% or less to 55% to 70% can be reused in a composting facility.

(7) It is possible to provide a method for efficiently biologically treating a biomass liquid digestate and a wastewater treatment device (facility) therefor.

(8) According to the present invention, it is possible to form extra-large ($\phi$ 10 mm or more) to large ($\phi$ 5 to 10 mm) flocs and separate into the separated liquid from which the flocs have been removed and the dewatered cake with an presumed (expected) moisture content of 70% or less, more specifically, a moisture content of 55% or less to 55% to 70%, and 78% or less of BOD of the raw water can be removed.

(9) A stable water treatment effect can be expected by reducing the BOD volume load, reducing the amount of generated sludge, and reducing the amount of required oxygen.

[Brief Description of Drawings]

[Fig. 1]

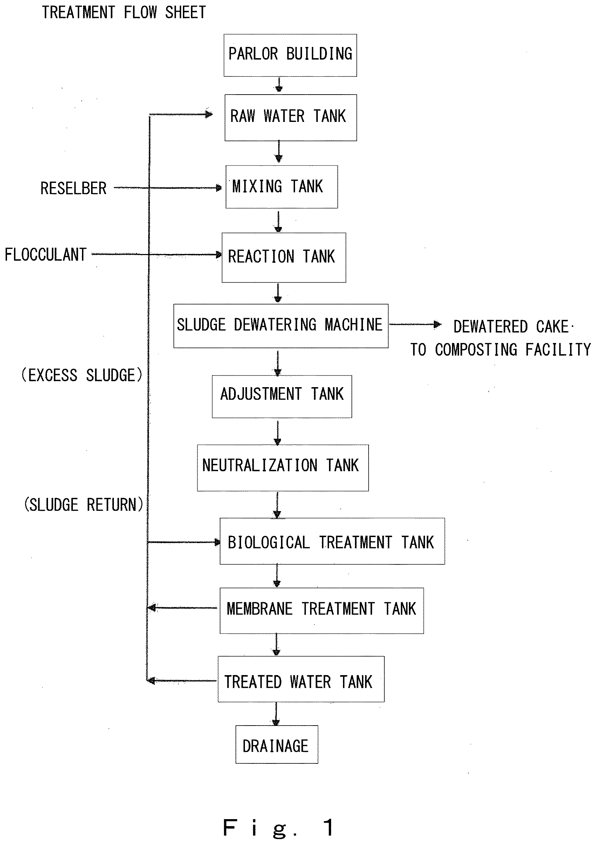

Fig. 1 shows the treatment flow sheet of a parlor wastewater treatment device including a purification facility equipped with a mixing tank - a reaction tank - a sludge dewatering machine - a neutralization tank - a biological treatment tank.
[Fig. 2]

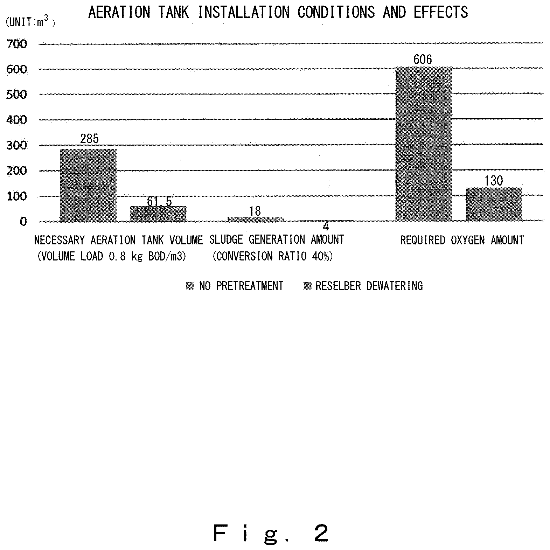

Fig. 2 shows the aeration tank installation conditions and effects (graph with a small numerical value: Reselber dewatering).
[Fig. 3]

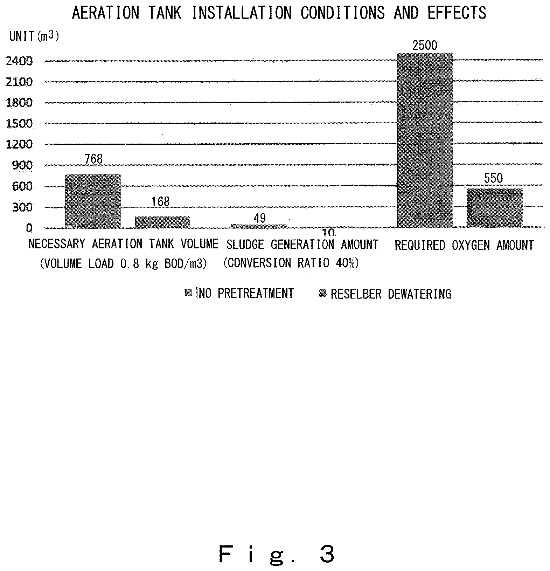

Fig. 3 shows the aeration tank installation conditions and effects (graph with a small numerical value: Reselber dewatering).
[Fig. 4]

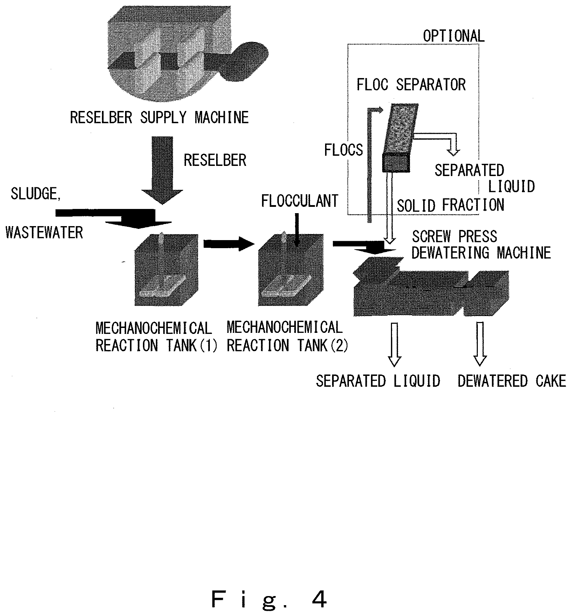

Fig. 4 is a diagram schematically showing an example of a Reselber dewatering system, wherein a floc separator is optional.
[Fig. 5]

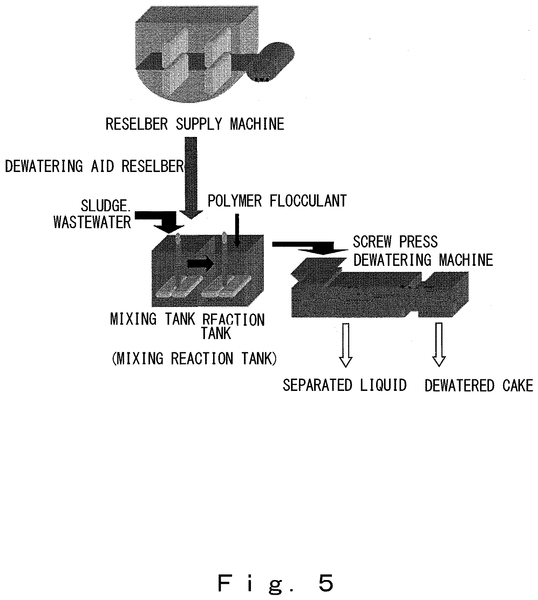

Fig. 5 is a diagram schematically showing an example of a Reselber dewatering system.
[Fig. 6]

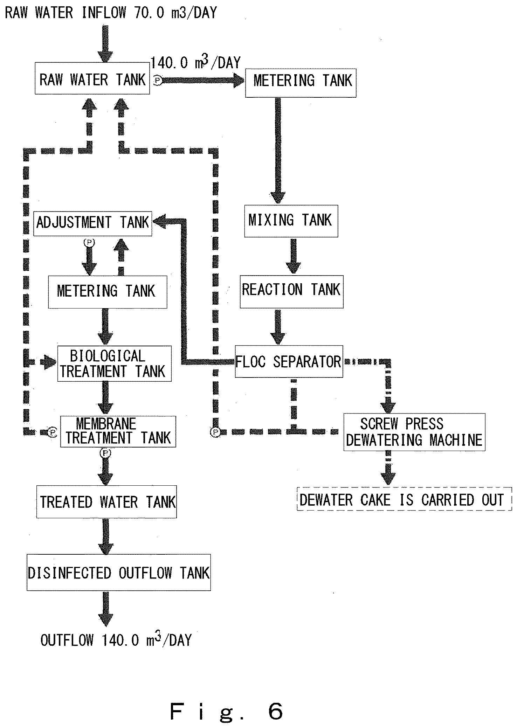

Fig. 6 shows the treatment flow sheet of a biomass liquid digestate (wastewater) treatment device including a purification facility equipped with a mixing tank - a reaction tank - a sludge dewatering machine - a biological treatment tank.

[Description of Embodiments]

Next, an embodiment of the present invention will be specifically described based on an example related to parlor wastewater. In the following examples, "/d" and "/day" each indicate a value per "1 day".

Example 1

In this example, the equipment used for the treatment of parlor wastewater according to the present invention will be described.

As shown in Fig. 1, (a parlor building →) a raw water tank → a mixing tank → a reaction tank → a sludge dewatering machine → an adjustment tank → a neutralization tank → a biological treatment tank → a membrane treatment tank → a treated water tank (→ drainage) were installed as a BOD-SS load reduction/dewatering and treatment facility for parlor wastewater that is discharged from the parlor building and is complexly contaminated with milk waste, germicidal disinfectant, washing drainage, livestock excreta, and the like.

In the raw water tank, the volume of one tank was set to W 2.5$\phi$ $\times$ L 9.7 m $\times$ H 1.9 m = 37.84 m$^3$ so that the raw water flowing in 24 hours could be dewatered in 8 hours.

The mixing tank to which the dewatering aid was added had a volume of 576 liters, was made of SUS and was equipped with a 0.4 kw stirrer. The reaction tank to which the flocculant (polymer flocculant) was added had a volume 504 liters, was made of SUS and was equipped with a stirrer controlled by a 0.4 kw inverter.

The sludge dewatering machine was a screw press-type dewatering machine with an operation time of 8 h/d and a treatment capacity of a BOD removal amount of 150 kg/d (remaining amount 50 kg) and an SS removal amount of 294 kg/d (remaining amount 6 kg). The addition amount of the dewatering aid used was 1% vs. the wastewater volume, and the amount of the flocculant (polymer flocculant) used was 1% as an addition ratio of a 0.2% solution. The flow rate adjustment tank had a volume of one tank of W 2.5$\phi$ $\times$ L 8.8 m $\times$ H 2.1 m = 37.64 m$^3$ so that the separated liquid flowing in in 8 hours (dewatering machine operating time) could be fed at 24 H/d.

The neutralization tank had a volume of 576 liters to have a residence time of 15 min or more with respect to the daily average inflow rate, and was made of SUS and had a volume of one tank of W 0.8$\phi$ × L 0.8 m × H 0.9 m = 0.576 m$^3$. The biological treatment and membrane treatment tanks as the biological treatment tank were operated intermittently with a blower at 24 H/d, and the volume of one biological treatment tank was W 2.5$\phi$ × L 7.4 m × H 2.1 m = 31.48 m$^3$, and the volume of one membrane treatment tank was W 2.5$\phi$ × L 7.4 m × H 2.1 m = 32.02 m$^3$ for a total of 63.5 m$^3$. The required number of installed membranes was 50/group × 4 for a total of 200 with a permeate flow rate of 0.35 m$^3$/m$^2$.

The treated water tank was equipped with a discharge pump (50 A × 0.75 kw/1 unit) and a return pump (50 A × 0.75 kw/1 unit), the inflow rate was 50 m$^3$/d, and the volume of one tank was set to W 2.5$\phi$ × L 2.6 m × H 2.0 m = 10.44 m$^3$ to obtain the required residence time of 30 min or more relative to the daily average inflow rate.

The aeration blower and membrane blower of the biological treatment/membrane treatment tank were operated, and the amount of oxygen necessary for the biological treatment was determined by the following formula.

$$O_2 \text{ (kg/day)} = 0.5 \times \text{BOD load amount (kg/d)} \dots (1) + 0.07$$

$$\times \text{MLSS concentration (kg/m}^3) \dots (2) \times \text{biological treatment}$$

$$\text{tank volume (m}^3) \dots (3) + 4.6 \times \text{N load amount (kg/d)} \dots (4)$$

Here, the following settings were used: (1) was BOD 50 kg/d, (2) was N load amount (T-N) 22.5 kg/d, and O$_2$ (kg/day) was 0.5 × 50 kg + 0.07 × 4 kg/m$^3$ × 63.5 m$^3$ + 4.6 × 22.5 = 146.2 kg/day.

The required air amount (dissolution efficiency 5%, 1 m$^3$/oxygen 0.28 kg) was set to 146.2 kg/day ÷ 0.28 kg/m$^3$ ÷ 0.05 = 10.443 m$^3$/day = 7.25 m$^3$/min.

Example 2

In this example, the (parlor building →) raw water tank → mixing tank → reaction tank → sludge dewatering machine → adjustment tank → neutralization tank → biological treatment tank → membrane treatment tank → treated water tank (→ drainage) installed in Example 1 were used, and "pulverized chaff", which was pulverized chaff (sample) mainly composed of a pulverized product having a particle size of 1 to 100 $\mu$m and obtained by pulverizing chaff of vegetable fibers by mechanical shearing was used as the dewatering aid having an Mp value of Mp ≤ 70. Further, in the following examples, "Reselber" (manufactured by Reselber Co., Ltd., product numbers: MT2000, MT5000, MT7000), which is a commercial product equivalent to the above "pulverized chaff", was used as a sample. In these Reselber products, pulverized cardboard is added to the pulverized chaff as the main component, and the product numbers correspond to the amount of the pulverized cardboard.

In addition to these Reselber products, for example, commercially available products to which pulverized products such as mug straw, straw and/or corn cob are added to the pulverized chaff as the main component can be obtained as the Reselber products.

(1) Selection of flocculant

Parlor wastewater (TS concentration 0.36%, pH5.84, brown cloudy color) was used as a sample to be tested, Reselber (MT2000) as a sample (commercial product) was added as a dewatering aid at 0.1% (vs. wastewater volume) to 100 ml of the wastewater, each of about 30 types of flocculants (polymer flocculants, and the like) was added, and the reaction was confirmed. For example, 0.05 ml of a flocculant (product number: RB-PT) and 1 ml of a flocculant (product number: RB-C1805) were added, and floc determination was performed.

The results are shown in Table 1. The determination conditions were A to E: the highest rank to the lowest rank. Since the evaluation of the supernatant liquor was the best A+++ with RB-PT and RB-C1805 among all the product numbers, the flocculants (RB-PT and RB-C1805) were selected from about 30 types of flocculants as flocculants for the dewatering aid Reselber (MT2000) (polymer flocculants suitable for the dewatering aid).

[Table 1]

| No. | Flocculant (1) | | Flocculant (2) | | Floc determination | | | | Overall evaluation |
|---|---|---|---|---|---|---|---|---|---|
| | Product | Addition amount | Product | Addition amount | Supernatant liquor | Size | Hardness | Tightness | |
| 1 | RB-PT | 0.05 ml | RB-C1805 | 1 ml | A+++ | A- | B- | B- | ○ |

(2) Selection of dewatering aid

Next, in order to select a specific pulverized product that can be used in the present invention as a dewatering aid from the pulverized products obtained by pulverizing vegetable fibers by mechanical shearing, 0.1% (vs. wastewater volume) of each of commercial products (three products: "Reselber MT2000", "Reselber MT5000", and "Reselber MT7000" manufactured by Reselber Co., Ltd.) was added to 100 ml of wastewater, and floc determination (supernatant liquor, size, hardness, tightness) and overall evaluation were performed. The results are shown in Table 2. The determination conditions were A to E: highest rank to lowest rank.

In the evaluation of the supernatant liquor, the highest evaluation of all product numbers was obtained for "Reselber MT5000", but based on the results of Table 2, it was determined that the evaluation of "Reselber MT2000" was also sufficient, and "Reselber MT2000" was selected as the dewatering aid. Accordingly, in the following dewatering test of the present example, it was decided to use, as the dewatering aid, a commercial product "Reselber (MT2000)" which is equivalent to a pulverized product (sample) composed mainly of a pulverized product having a particle size of 1 to 100 $\mu$m that was obtained by pulverizing chaff of vegetable fibers by mechanical shearing.

[Table 2]

| Reselber product number | Floc determination | | | | Overall evaluation |
|---|---|---|---|---|---|
| | Supernatant liquor | Size | Hardness | Tightness | |
| MT2000 | A+++ | A- | B- | B- | ⊗ |
| MT5000 | A++++ | A- to A | B- to B | B- to B | ○ |
| MT7000 | A+++ | A- to A | B | B | ○ |

(3) Dewatering test

The dewatering aid "Reselber (MT2000)" was added to 800 ml of wastewater, and 0.4 ml of a flocculant (product number: RB-PT) and 8 ml of a flocculant (product number: RB-C1805) were added to form flocs. The flocs were then put into a dewatering tester equipped with a screw press dewatering machine, and a dewatering test was performed. The separated liquid from which the flocs were removed and the dewatered cake were separated, and the moisture content of the separated dewatered cake was measured. The results are shown in Table 3. As a result of using the specific dewatering aid and the flocculant in combination, the moisture content of the dewatered cake was 54.54%, which is 55% or less. The addition ratio was relative to the wastewater volume.

[Table 3]

| Reselber | | Flocculant (1) | | Flocculant (2) | | Cake moisture content |
|---|---|---|---|---|---|---|
| Product | Addition ratio | Product | Addition amount | Product | Addition amount | |
| MT2000 | 0.10% | RB-PT | 0.4 ml | RB-C1805 | 8 ml | 54.54% |

(4) Water quality analysis of separated liquid

The BOD values of the raw water (wastewater before dewatering) and the separated liquid from which flocs were removed in the dewatering test (sometimes referred to as "Reselber-dewatered separated liquid") were measured with a BOD meter. The results are shown in Table 4. It was confirmed that 78.4% of BOD value (biological oxygen demand) was removed by using the dewatering aid and the specific flocculant in combination. Fig. 2 shows the results obtained in testing the biological treatment tank (aeration tank) installation condition. From the figure, it was found that a stable water treatment effect can be expected by reducing the BOD volume load, reducing the amount of generated sludge, and reducing the amount of required oxygen.

[Table 4]

| Sample name | BOD |
|---|---|
| Raw water | 4560 mg/l |
| Reselber-dewatered separated liquid | 985 mg/l |

(5) Summary

In the above dewatering test, 78.4% of BOD value was removed from the raw water having a BOD value of 4.560 mg/l, and a dewatered separated liquid having a BOD value of 985 mg/l was obtained. Moreover, in the dewatering test using the specific dewatering aid and the flocculant, the moisture content of the dewatered cake was 54.54%. As a result of the above dewatering test, a suitable dewatering aid was "Reselber, product number: MT2000", and the addition ratio was 0.1% or less (vs. wastewater volume).

Further, suitable flocculants were product numbers RB-PT and RB-C1805, and the addition ratios of RB-PT and RB-C1805 were 0.05% and 1% (0.2% aqueous solution), respectively (the amount used relative to 1 m$^3$ of the wastewater treatment amount was 0.725 kg and 0.02 kg for RB-PT and RB-C1805, respectively).

The results obtained in the evaluation of supernatant liquor (turbid → transparent), evaluation of flocs ("size": flocs are not formed, small ($\phi$ 3 mm or less), medium ($\phi$ 3 to 5 mm), large ($\phi$ 5 to 10 mm), and extra-large ($\phi$ 10 mm or more); "hardness": soft → hard; "tightness": loose → tight), E to A rank evaluation, and evaluation of presumed (expected) cake moisture content are summarized in Table 5. The results obtained in evaluation of BOD value and supernatant liquor, evaluation of flocs, rank evaluation, and evaluation of cake moisture content in the dewatering test have confirmed that with the present invention, flocs in which insoluble substances containing harmful substances are aggregated can be easily removed and the purified liquid phase can be purified to the extent such that the liquid can be discarded into the river. Further, the present invention is not limited to the case where the dewatering aid having a Mp ≤ 55 is used, and the results on the BOD value, evaluation of supernatant liquor, evaluation of flocs, and cake moisture content have confirmed that flocs in which insoluble substances containing harmful substances are aggregated can be easily removed and the purified liquid phase can be purified to the extent such that the liquid can be discarded (drained) into the river also when the dewatering aid having a Mp = 55 to 70 is used, in the same manner as in the case where the dewatering aid having a Mp ≤ 55 is used.

[Table 5]

| Supernatant liquor | Size | Hardness | Tightness | Evaluation | Presumed cake moisture content |
|---|---|---|---|---|---|
| Transparent | Extra-large ($\phi$ 10 mm or more) | Hard | Tight | A | 55% or less |
| ↑ | Large ($\phi$ 5 to 10 mm) | ↑ | ↑ | B | 55% to 70% |
| \| | Medium ($\phi$ 3 to 5 mm) | \| | \| | C | 70% to 80% |
| ↓ | Small ($\phi$ 3 mm or less) | ↓ | ↓ | D | 80% to 90% |
| Turbid | No flocs | Soft | Loose | E | 90% or more |

Example 3

In the present example, pulverized chaff (pulverized chaff composed mainly of a pulverized product having a particle size of 1 to 10 $\mu$m and obtained by pulverizing chaff of vegetable fibers by mechanical shearing) was used as the specific dewatering aid. Further, in the below-described example, "Reselber" (manufactured by Reselber Co., Ltd., product number: MT2000, and the like), which is a commercially available product equivalent to the "pulverized chaff", was used as a sample.

(1) Selection of flocculant

"Reselber (MT2000)" as a sample (commercial product) was added as a dewatering aid at 0.1% (vs. wastewater volume) to 100 ml of parlor wastewater (TS concentration 1.92%, pH 4.56, white cloudy color), each of about 30 types of polymer flocculants (0.2% aqueous solution) was added, and the reaction was confirmed. The results are shown in Table 6. When the reaction was confirmed, the evaluation of the supernatant liquor in the floc determination was the best, A to A+, with RB-C1805 among all the product numbers. Therefore, the flocculant (RB-C1805) was selected from about 30 types of flocculants as the polymer flocculant suitable for the dewatering aid Reselber (MT2000).

[Table 6]

| No. | Flocculant (1) | | Flocculant (2) | | Floc determination | | | | Overall evaluation |
|---|---|---|---|---|---|---|---|---|---|
| | Product | Addition amount | Product | Addition amount | Supernatant liquor | Size | Hardness | Tightness | |
| 1 | RB-C1805 | 6 ml | - | - | A to A+ | B+ | B | B | ○ |

(2) Selection of dewatering aid

Next, in order to select, as a dewatering aid, a specific pulverized product that can be used in the present invention from the pulverized products obtained by pulverizing vegetable fibers by mechanical shearing, commercially available products (three products: "Reselber MT2000", "Reselber MT5000" and "Reselber MT7000" manufactured by Reselber Co., Ltd.), were added at 0.1% (vs. wastewater volume) of each to 100 ml of parlor wastewater and floc determination was performed. The results are shown in Table 7. When the reaction was confirmed, in the floc determination (supernatant liquor, size, hardness, tightness), the evaluation of the supernatant liquor was A to A+ which was the highest evaluation of all product numbers. Therefore, "MT2000" was selected as the dewatering aid.

Accordingly, in the following dewatering test of the present example, it was decided to use, as the dewatering aid, a commercial product "Reselber (MT2000)" which is equivalent to a pulverized product (sample) composed mainly of a pulverized product having a particle size of 1 to 100 $\mu$m that was obtained by pulverizing chaff of vegetable fibers by mechanical shearing.

[Table 7]

| Reselber product number | Floc determination | | | | Overall evaluation |
|---|---|---|---|---|---|
| | Supernatant liquor | Size | Hardness | Tightness | |
| MT2000 | A to A+ | B+ | B | B | ⊗ |
| MT5000 | A | B+ | B | B | ○ |
| MT7000 | A | B+ | B | B | ○ |

(3) Dewatering test

The dewatering aid "Reselber (MT2000)" was added at 0.10% (vs. wastewater volume) to 500 ml of parlor wastewater, and 30 ml of a flocculant (product number: RB-C1805) was added to form flocs. The flocs were then put into a dewatering tester (pressurization area 81 cm$^2$, pressure/holding time variable), a dewatering test was performed, the separated liquid from which the flocs were removed and the dewatered cake were separated, and the moisture content of the separated dewatered cake was measured. As for the dewatering pressurization and holding time, a screw press dewatering machine was used. The results are shown in Table 8. As a result of using the specific dewatering aid and the flocculant in combination, the moisture content of the dewatered cake was 35.60%, which is 55% or less.

[Table 8]

| Reselber | | Flocculant (1) | | Flocculant (2) | | Cake moisture content |
|---|---|---|---|---|---|---|
| Product | Addition ratio | Product | Addition amount | Product | Addition amount | |
| MT2000 | 0.10% | RB-C1805 | 30 ml | - | - | 35.60% |

(4) Water quality analysis of separated liquid

The BOD values of the raw water (wastewater before dewatering) and the separated liquid from which flocs were removed in the dewatering test (sometimes referred to as "Reselber-dewatered separated liquid") were measured with a BOD meter. The results are shown in Table 9. As a result of using the dewatering aid and the flocculant in combination, 78.8% of BOD value was removed from the BOD value (12,300 mg/1) of the raw water, and a separated liquid having a BOD value of 2700 mg/l was obtained. Fig. 3 shows the results obtained in testing the biological treatment tank (aeration tank) installation condition. From the figure, it was found that a stable water treatment effect can be expected by reducing the BOD volume load, reducing the amount of generated sludge, and reducing the amount of required oxygen.

[Table 9]

| Sample name | BOD |
|---|---|
| Raw water | 12,300 mg/l |
| Reselber-dewatered separated liquid | 2700 mg/l |

(5) Summary

In the above dewatering test, 78% of BOD value was removed from the raw water having a BOD value of 12,300 mg/l, and a dewatered desorbed water having a BOD value of 2,700 mg/l was obtained. As a result of using the specific dewatering aid and the flocculant, the moisture content of the dewatered cake was 35.6%. As a result of the above dewatering test, a suitable dewatering aid was "Reselber, product number: MT2000", and the addition ratio was 0.1% or less; 1 kg or less was used (vs. wastewater volume) for 1 $m^3$ of wastewater treatment amount. The product number of a suitable flocculant was RB-C1805, and the addition ratio was 6%; 0.12 kg was used (0.2% aqueous solution) for 1 $m^3$ of wastewater treatment amount.

[Evaluation of supernatant liquor, evaluation of flocs and evaluation of cake moisture content]

The results obtained in the evaluation of supernatant liquor (turbid → transparent), evaluation of flocs ("size": flocs are not formed, small (φ 3 mm or less), medium (φ 3 to 5 mm), large (φ 5 to 10 mm), and extra-large (φ 10 mm or more); "hardness": soft → hard; "tightness"), E to A rank evaluation, and evaluation of presumed (expected) cake moisture content are summarized in Table 10. In the dewatering test, the supernatant liquor was transparent (the size of the flocs was extra-large (φ 10 nm or more)), and the moisture content of the dewatered cake was 35.6% which is 55% or less. Further, the present invention is not limited to the case where the dewatering aid having an Mp ≤ 55 is used, and it was confirmed that the supernatant liquor was substantially transparent (the size of the flocs was large (φ 5 to 10 nm)), the moisture content of the dewatering cake was within the range of 55% to 70%, and the purified liquid phase could be purified to the extent such that the liquid could be discarded into the river even when using a dewatering aid having a Mp = 55 to 70.

[Table 10]

| Supernatant liquor | Size | Hardness | Tightness | Evaluation | Predicted cake moisture content |
|---|---|---|---|---|---|
| Transparent | Extra-large (φ 10 mm or more) | Hard | Tight | A | 55% or less |
| ↑ | Large (φ 5 to 10 mm) | ↑ | ↑ | B | 55% to 70% |
| \| | Medium (φ 3 to 5 mm) | \| | \| | C | 70% to 80% |
| ↓ | Small (φ 3 mm or less) | ↓ | ↓ | D | 80% to 90% |
| Turbid | No flocs | Soft | Loose | E | 90% or more |

Next, an embodiment of the present invention will be specifically described based on an example related to biomass liquid digestate. In the following examples, "/D", "/day", and "/d" each indicate a value per "1 day".

Example 4

In this example, a wastewater treatment device equipped with at least a raw water tank - a mixing tank - a reaction tank - an adjustment tank - a sludge dewatering machine - (a neutralization tank) - a biological treatment tank (aeration tank) - a membrane treatment tank - a treated water tank - a dilution water tank - a disinfection tank will be specifically described as a wastewater treatment device (facility) to be used for the treatment of a biomass power generation liquid digestate of the present invention.

In the raw water tank, the actual volume of one tank was set to W 8.0 m × L 8.0 m × H 2.2 m = 140.8 $m^3$ to obtain a volume for 1 day or more with respect to the planned throughput. One raw water auxiliary pump: 50 A × 0.75 kw 200 V, one raw water pump: 80 A × 2.2 kw 200 V, one raw water tank stirring blower: 65 A × 3.7 kw 200 V, and 16 aeration stirring devices (disk type) were installed in the raw water tank.

The pre-treatment Reselber dewatering equipment had a treatment amount: 140.0 $m^3$/D, a load amount: BOD amount 420.0 kg/day, a removal amount: BOD 420.0 kg/D × 83.3% = 349.8 kg/d (remaining amount 70.2 kg/d), SS: 2100.0 kg/D × 98.0% = 2058.0 kg/d (remaining amount 42.0 kg/d).

The following mechanical equipment was installed. One sewage metering device: made of FRP, 90° triangular weir (weighing only); one mixing/reaction tank apparatus: made of SUS, W 900 mm × L 1800 mm × H 1260 mm, actual volume 0.81$m^3$/tank × 2 tanks; two stirrers 200 to 300 rpm × 0.75 kw × 200 V (one of them is inverter controlled); two floc separators: made of SUS, 0.2 kw × 200 V, equipped with special clogging prevention mechanism and automatic cleaning device; two screw press dewatering machines (RSP-300Y type) (inverter controlled): liquid contact unit, made of SUS, equipped with fixed-type automatic washing device, 1.5 kw × 200 V; and two dewatered cake transfer conveyor; made of SUS, U200 type × 5 m × 0.75 kw × 200 V.

The amount of generated dewatered cake was $(140.0 \text{ m}^3/\text{d} \times 2.1\%) \div (1 - 0.7) = 9.8 \text{ t/D}$, where the raw water concentration was 2.1% and the moisture content of the dewatered cake was 70%. The amount of the flocculation aid (Reselber MT-2000) used was $140.0 \text{ m}^3/\text{D} \times 0.1\% = 140.0 \text{ kg/D}$ with 0.1% addition vs. the liquid. The amount of the polymer flocculant used was $140.0 \text{ m}^3/\text{D} \times 10.5\% \times 0.5\% = 73.5 \text{ kg/D}$, with 10.5%, vs. the liquid, of the flocculant 1 added at 0.5% concentration, and the 0.5% dissolution concentrated liquid was $73.5 \text{ kg} \div 0.5\% = 14.7 \text{ m}^3/\text{D}$; and $140.0 \text{ m}^3/\text{D} \times 21\% \times 0.2\% = 58.8 \text{ kg/D}$, 21%, vs. the liquid, of the flocculant 2 added at 0.2% concentration, and the 0.2% concentrated liquid was $58.8 \text{ kg} \div 0.2\% = 29.4 \text{ m}^3/\text{D}$.

The adjustment tank had an actual volume of W 2.4 m × L 5.0 m × H 4.0 m = 48.0 m³ in order to supply wastewater flowing in over 22 hours in 24 hours. In the adjustment tank, one adjustment pump: 50 A × 0.75 kw 200 V, one adjustment tank aeration stirring blower: 50 A × 2.2 kw 200 V, and six aeration stirring devices (disk type) were installed.

The biological treatment tank was of an intermittent operation system, and the required volume was set to $140.0 \text{ m}^3/\text{D} \times 500 \text{ mg/l} \div 0.2 \text{ kg·BOD/m}^3\text{·day} = 350.0 \text{ m}^3$ in order to keep the inflow BOD load at 0.2 kg·BOD/m³ or less. The actual volumes were W 5.0 m × L 6.6 m × H 4.0 m = 132.0 m³, W 4.2 m × L 6.6 m × H 4.0 m = 110.88 m³, W 3.0 m × L 6.6 m × H 4.0 m = 79.2 m³, and W 5.0 m × L 4.0 m × H 4.0 m (membrane treatment tank) = 80.0 m³ for a total of 402.08 m³. The required air amount was $O_2 = (0.8 \times 70.2 \text{ kg/D}) + (0.07 \times 5 \text{ kg/m}^3 \times 402.08 \text{ m}^3) = 196.89 \text{ kg/d}$, $O_2 = 196.89 \text{ kg/d} \div 0.49 \text{ kg/m}^3 \div 0.04 = 10,045.5 \text{ m}^3/\text{d} = 10.1 \text{ m}^3/\text{min}$.

In the membrane treatment tank, the required number of membranes was set to $140.0 \text{ m}^3/\text{D} \div 0.275 \text{ m}^3/\text{m}^2\text{·D} \div 0.8 \text{ m}^2/\text{membrane} \div 0.8 \text{ H} = 796$ membranes, and the number of membrane bases used was set to 200 membranes/base × 4 bases = 800 membranes in order to obtain a permeate flow rate of 0.275 m³/m²·D at 24 H/D (operation for 8 min - cleaning for 2 min) . The amount of air required for membrane treatment was set to 10 L/min × 800 membranes = 8.0 m³/min so that the air amount per membrane was 10 L/min. The return circulation ratio was set to 5 times or more. In the membrane treatment tank, four submerged membrane separators: pore size 0.1 to 0.4 μm, 200 membranes/base, 4 bases; two membrane blowers: 65 A × 45 kPa × 4.1 m³/min × 5.5 kW; one return circulation pump: 50 A × 1.5 kw; and two membrane treatment water pumps: 40 A × 0.75 kw (onshore corrosion resistant type) were installed.

The treated water tank had a required volume of 140.0 m³/D < 5.84 m³/h × 12 hours = 70.08 m³ and an actual volume of W 1.8 m × L (6.6 m + 5.9 m) × H 3.5 m = 78.75 m³ in order to ensure the volume enabling storage of water that was membrane-treated for 12 hours. One treated water transfer pump 65A × 2.2 kw was installed in the treated water tank.

The dilution water tank had a required volume of 70 m³/D and an actual volume of W 4.5 m × L 5.0 m × H 3.5 m = 79.0 m³ in order to ensure the volume enabling storage of dilution water (well water + membrane treated water) sufficient for one day. One dilution water transfer pump 65 A × 2.2 kw (solenoid valve 40 A for well water) was installed in the dilution water tank.

The disinfection tank equipment had a treatment amount of 140.0 m³/D. The required chlorine amount was set to $140.0 \text{ m}^3/\text{D} \times 10 \text{ mg/L} \times 10^{-3} = 1.40 \text{ kg/D}$, 1.40 kg/D ÷ 70% = 2.0 kg/D in order to obtain an injection of 10 mg/L with respect to the treatment amount. One sterilizer (hypochlorous acid tablet dissolution method, PVC type, 15 kg type) was installed in the disinfection tank equipment.

Example 5

In the present example, the raw water tank - mixing tank - floc separator - screw press dewatering machine - adjustment tank - metering tank - biological treatment tank (aeration tank) - membrane treatment tank - treated water tank - dilution water tank - disinfection tank (→ outflow) (see Fig. 6) installed in Example 4 were used, and "pulverized chaff", which was pulverized chaff (sample) mainly composed of a pulverized product having a particle size of 1 to 100 μm and obtained by pulverizing chaff of vegetable fibers by mechanical shearing, was used as the dewatering aid having an MP value (moisture content evaluation) of MP (cake moisture content) ≤ 70. Further, in the following example, "Reselber" (manufactured by Reselber Co., Ltd., product numbers: MT2000, MT5000, MT7000), which is a commercial product equivalent to the above "pulverized chaff", was used as a sample. In these Reselber products, pulverized cardboard is added to the pulverized chaff as the main component, and the product numbers correspond to the amount of the pulverized cardboard.

In addition to these Reselber products, for example, commercially available products (manufactured by Reselber Co., Ltd.) to which pulverized products such as mug straw, straw and/or corn cob are added to the pulverized chaff as the main component can be obtained as the Reselber products.

(1) Selection of flocculant

Biomass power generation liquid digest [water quality after pretreatment, pH value: 7.5 -8.5, BOD value: 500 mg/l (removal ratio 83.3%), SS value: 300 mg/l (removal ratio 98.0%)] was used as a sample to be treated, Reselber (MT2000) as a sample (commercial product) was added as a dewatering aid at 0.1% (vs. wastewater volume) to 100 ml of the sludge, each of about 30 types of flocculants (polymer flocculants, and the like) was added, and the reaction was confirmed. For example, a flocculant (product number: RB-C1805) was added at an addition ratio of 46%, and floc determination was performed.

The results are shown in Table 11. The determination conditions were A to E: the highest rank to the lowest rank. Since the evaluation of the supernatant liquor was the best A++ with the flocculant RB-C1805 among all the product numbers, the flocculants (RB-C1805) was selected from about 30 types of flocculants as a flocculant for the dewatering aid Reselber (MT2000) (polymer flocculant suitable for the dewatering aid).

[Table 11]

| No. | Flocculant (1) | | Flocculant (2) | | Floc determination | | | | Overall evaluation |
|---|---|---|---|---|---|---|---|---|---|
| | Product | Addition ratio | Product | Addition ratio | Supernatant liquor | Size | Hardness | Tightness | |
| 1 | RB-C1805 | 46% | - | - | A++ | A | B | B | ○ |

(2) Selection of dewatering aid

Next, in order to select a specific pulverized product that can be used in the present invention as a dewatering aid from the pulverized products obtained by pulverizing vegetable fibers by mechanical shearing, 0.1% (vs. sludge volume) of each of three commercial products "Reselber MT2000", "Reselber MT5000", and "Reselber MT7000" (manufactured by Reselber Co., Ltd.) was added to 100 ml of sludge, and floc determination (supernatant liquor, size, hardness, tightness) and overall evaluation were performed. The results are shown in Table 12. The determination conditions were A to E: the highest rank to the lowest rank.

When the reaction was confirmed, in the evaluation of the supernatant liquor in the floc determination, the highest evaluation A+++ of all product numbers was for MT7000, and Reselber MT7000 was selected as the dewatering aid. Accordingly, in the following dewatering test of the present example, it was decided to use, as the dewatering aid, a commercial product "Reselber (MT7000)" which is equivalent to a pulverized product (sample) composed mainly of a pulverized product having a particle size of 1 to 100 $\mu$m that was obtained by pulverizing chaff of vegetable fibers by mechanical shearing.

[Table 12]

| Reselber product number | Floc determination | | | | Overall evaluation |
|---|---|---|---|---|---|
| | Supernatant liquor | Size | Hardness | Tightness | |
| MT2000 | A++ | A | B | B | |
| MT5000 | A++ | A | B+ to A- | B+ to A- | |
| MT7000 | A+++ | A | B+ | B+ | ○ |

(3) Dewatering test

The dewatering aid "Reselber (MT7000)" was added to 600 ml of sludge, and a flocculant (product number: RB-C1805) was added at an addition ratio of 46% (vs. sludge volume, 0.2% aqueous solution) to form flocs. The flocs were then put into a dewatering tester equipped with a screw press dewatering machine, and a dewatering test was performed. The separated liquid from which the flocs were removed and the dewatered cake were separated, the moisture content of the separated dewatered cake was measured, and water quality analysis of the desorbed water was performed. The dewatering pressure and holding time were set on the assumption of a screw press dewatering machine. The results are shown in Table 13. When 0.1% of the Reselber was added, the moisture content of the dewatered cake was 59.03%.

[Table 13]

| Reselber | | Flocculant (1) | | Flocculant (2) | | Cake moisture content |
|---|---|---|---|---|---|---|
| Product | Addition ratio | Product | Addition ratio | Product | Addition ratio | |
| MT7000 | 0.1% | RB-C1805 | 46% | - | - | 59.03% |

(4) Water quality analysis of separated liquid

Water quality analysis (analysis of BOD, COD, SS, T-N) of raw water (water before dewatering) and the separated liquid in the above dewatering test (may be described as "Reselber-dewatered separated liquid") were performed by a public institution. The results are shown in Table 14. It was confirmed that Reselber dewatering removed BOD at 86.5%, COD at 91.8%, SS at 99.8%, and T-N at 54%.

[Table 14]

| Sample name | BOD | COD | SS | T-N |
|---|---|---|---|---|
| Raw water | 2600 mg/l | 8000 mg/l | 13,000 mg/l | 3700 mg/l |
| Reselber-dewatered separated liquid | 350 mg/l | 660 mg/l | 28 mg/l | 1700 mg/l |

(5) Summary

It was confirmed that the Reselber dewatering demonstrated significant reduction in all items of water quality analysis of the separated liquid. This proves that the construction cost of the purification tank can be significantly reduced. It was confirmed that the Reselber dewatering reduced the cake moisture content to 59.3%, and upon comparison with the total amount of industrial wastewater fraction that is presently cannot be treated and is discarded, the amount was 1/18 of the present amount.

Further, a suitable flocculant was product number RB-C1805, and the addition ratio thereof was 46% (vs. sludge volume, 0.2% aqueous solution). The suitable Reselber was product number MT7000, and the addition ratio was 0.1% (vs. sludge volume).

The results obtained in the evaluation of supernatant liquor: (turbid → transparent), evaluation of flocs (A to E, "size": flocs are not formed, small (φ 3 mm or less), medium (φ 3 to 5 mm), large (φ 5 to 10 mm), and extra-large (φ 10 mm or more); "hardness": soft → hard; "tightness": loose → tight), the presumed (expected) cake moisture content: 90% or more, 80% to 90%, 70% to 80%, 55% to 70%, and 55% or less are summarized in Table 15.

According to the dewatering test, the supernatant liquor was transparent (the size of the flocs was extra-large (φ 10 mm or more)), and the moisture content of the dewatered cake was 59.3% which is within 55% to 70%. Further, the present invention is not limited to the case where the dewatering aid having an MP (cake moisture content) ≤ 55 is used, and it was confirmed that the purified liquid phase can be purified to the extent such that the liquid can be discarded into the river also when the dewatering aid having MP (cake moisture content) = 55% to 70% is used, provided that the supernatant liquor is almost transparent (the size of the flocs is large (φ 5 to 10 mm)) and if the moisture content of the dewatered cake is in the range of 55% to 70%.

[Table 15]

- Floc determination table

| Supernatant liquor | Size | Hardness | Tightness | Evaluation | Presumed cake moisture content |
|---|---|---|---|---|---|
| Transparent | Extra-large (φ 10 mm or more) | Hard | Tight | A | 55% or less |
| ↑ | Large (φ 5 to 10 mm) | ↑ | ↑ | B | 55% to 70% |
| \| | Medium (φ 3 to 5 mm) | \| | \| | C | 70% to 80% |
| ↓ | Small (φ 3 mm or less) | ↓ | ↓ | D | 80% to 90% |
| Turbid | No flocs | Soft | Loose | E | 90% or more |

Example 6

In the present example, the sample was purified using digested sludge from a municipal (K city) sewage treatment plant as a target sample.

(1) Selection of flocculant

Reselber MT2000 was added at 0.1% (vs. sludge volume) to 100 ml of a sludge [sample properties; TS (solid matter) concentration: 1.33%, pH: 7.25, appearance: black turbid color, odor: charcoal odor, fibrous material (100 mesh): 5.2%/ss, fibrous material (200 mesh): 14.2%/ss], each of about 30 kinds of flocculants (including K city-designated flocculants) was added, and the reaction was confirmed. The results are shown in Table 16.

[Table 16]

| No. | Flocculant | | | Floc determination | | | | Overall evaluation |
|---|---|---|---|---|---|---|---|---|
| | Product | Addition amount | Addition ratio vs. TS | Supernatant liquor | Size | Hardness | Tightness | |
| 1 | K city-designated flocculant | 12 ml | 1.8% | A- to A | A- to A | B- | B- | ○ |

When the reaction was confirmed, since it was B- in the evaluation of "Tightness" in the floc determination, the flocculant designated by the local government (K city) was selected.

(2) Selection of Reselber

Each of three kinds of Reselber MT2000, MT5000, and MT7000 was added to 100 ml of sludge at 0.1% (vs. sludge capacity), and the reaction was confirmed. The results are shown in Table 17.

[Table 17]

| Reselber product number | Floc determination | | | | Overall evaluation |
|---|---|---|---|---|---|
| | Supernatant liquor | Size | Hardness | Tightness | |
| MT2000 | A- | A- | B- to B | B- to B | ⊗ |
| MT5000 | A- to A | A- to A | B- to B | B- | ○ |
| MT7000 | A | B+ to A- | B- | B- | ○ |

Reselber MT2000 for which the evaluation of "tightness" in the floc determination was the best among all the products when the reaction was confirmed was selected.

(3) Dewatering test

Reselber MT2000 was added to 500 ml of sludge, and a polymer flocculant (0.2% aqueous solution) was added to form flocs. The flocs were then put into a dewatering tester (pressurization area 81 cm$^2$, pressure/holding time variable), a dewatering test was performed, and the moisture content of the discharged dewatered cake was measured. The dewatering pressure and holding time were set on the assumption of a screw press dewatering machine. The results are shown in Table 18.

[Table 18]

| Sample name | SS | T-P |
|---|---|---|
| Raw water | 11,000 mg/l | 510 mg/l |
| Reselber-dewatered separated liquid (Reselber 0.1%, flocculant designated by K city) | 42 mg/l | 97 mg/l |
| Reselber-dewatered separated liquid (Reselber 0.3%, flocculant designated by K city) | 27 mg/l | 97 mg/l |
| Reselber-dewatered separated liquid (Reselber 0.1%, flocculant selected by us) | 35 mg/l | 110 mg/l |
| Reselber-dewatered separated liquid (Reselber 0.3%, flocculant selected by us) | 26 mg/l | 99 mg/l |

When 0.04% of Reselber (addition ratio 3% vs. TS) was added, the cake moisture content was 78.67%. When 0.1% of Reselber (addition ratio 7.5% vs. TS) was added, the cake moisture content was 74.18%. When 0.3% of Reselber (addition ratio 22.5% vs. TS) was added, the cake moisture content was 69.92%.

(4) Water quality analysis of desorbed water

The SS value and T-P value of raw water (water before dewatering) and after desorption in the dewatering test were measured by a public institution. The results are shown in Table 19.

[Table 19]

| Reselber | | | Flocculant | | | Cake moisture content |
|---|---|---|---|---|---|---|
| Product number | Addition ratio vs. volume | Addition ratio vs. TS | Product number | Addition amount | Addition ratio vs. TS | |
| MT2000 | 0.04% | 3.0% | Flocculant designated by K city | 60 ml | 1.8% | 78.67% |

(continued)

| Reselber | | | Flocculant | | | Cake moisture content |
|---|---|---|---|---|---|---|
| Product number | Addition ratio vs. volume | Addition ratio vs. TS | Product number | Addition amount | Addition ratio vs. TS | |
| MT2000 | 0.10% | 7.5% | Flocculant designated by K city | 60 ml | 1.8% | 74.18% |
| MT2000 | 0.30% | 22.5% | Flocculant designated by K city | 60 ml | 1.8% | 69.92% |

(5) SS recovery rate

The SS recovery rate was 99.6% when 0.1% of Reselber was added (addition ratio 7.5% vs. TS) and the flocculant designated by the local government (K city) was used, 99.75% when 0.3% of Reselber was added (addition ratio 22.5% vs. TS) and the flocculant designated by the local government (K city) was used, 99.7% when 0.1% of Reselber was added (addition ratio 7.5% vs. TS) and the polymer flocculant (0.2% aqueous solution) was used, and 99.76% when 0.3% of Reselber was added (addition ratio 22.5% vs. TS) and the polymer flocculant (0.2% aqueous solution) was used.

(6) T-P recovery rate

The T-P recovery rate was 81% when 0.1% of Reselber was added (addition ratio 7.5% vs. TS) and the flocculant designated by the local government (K city) was used, 81% when 0.3% of Reselber was added (addition ratio 22.5% vs. TS) and the flocculant designated by the local government (K city) was used, 78.4% when 0.1% of Reselber was added (addition ratio 7.5% vs. TS) and the polymer flocculant (0.2% aqueous solution) was used, and 80.6% when 0.3% of Reselber was added (addition ratio 22.5% vs. TS) and the polymer flocculant (0.2% aqueous solution) was used.

(7) Summary

With the preferred Reselber product number MT2000, the addition ratio was 0.04% to 0.3% (vs. sludge capacity), and the addition ratio vs. TS was 3% to 22.5% (0.4 kg to 3 kg were used vs. sludge amount of $1m^3$). Further, with the preferred flocculant product number designated by the local government (K city), the addition ratio was 12% (0.2% aqueous solution), and the addition ratio vs. TS was 1.8% (0.24 kg was used vs. sludge amount of $1m^3$).

With the preferred flocculant product number designated by the local government (K city), the addition ratio was 12% (0.2% aqueous solution), and the TS addition ratio vs. TS (0.24 kg was used vs. sludge amount of $1 m^3$) was 1.8%. The Reselber dewatering resulted in the cake moisture content of 69.92% to 78.67%, the SS recovery ratio of 99.6% to 99.75%, and the T-P recovery ratio of 81%.

Evaluation of supernatant liquor was turbid → transparent, evaluation of flocs was: "size": flocs are not formed, small ($\phi$ 3 mm or less), medium ($\phi$ 3 to 5 mm), large ($\phi$ 5 to 10 mm), and extra-large ($\phi$ 10 mm or more); "hardness": soft → hard; "tightness": loose → tight, overall "evaluation" was E to A, and "presumed (predicted) cake moisture content" was 90% or more, 80% to 90%, 70% to 80%, 55% to 70%, and 55% or less (see Table 5).

Example 7

In this example, it was verified whether the cake moisture content could be reduced by dewatering treatment of biomass liquid digestate.

(1) Confirmation of sludge properties

A biomass liquid digestate (wet methane fermentation liquid digestate of food waste raw material [sample properties; TS (solid matter) concentration: 5.49%, pH: 7.59, appearance: black turbid, odor: nitrification odor]) was used as a target sample.

(2) Dewatering test

The dewatering aid Reselber (MT2000) was added to 300 ml of sludge, and a polymer flocculant A (0.2% aqueous solution) was added to form flocs. The flocs were then put into a dewatering tester (pressurization area 81 cm$^2$, pressure/holding time variable), a dewatering test was performed, and the moisture content of the discharged dewatered cake was measured. The dewatering pressure and holding time were set to 2000 G and 1 min on the assumption of a centrifuge and to 490 kPa and 5 min on the assumption of a screw press machine. The results are shown in Table 20.

[Table 20]

| Assumed dewatering machine | Sludge amount to be dewatered | Reselber | | Flocculant | | Cake moisture content |
|---|---|---|---|---|---|---|
| | | Product number | Addition ratio | Product number | Addition amount | |
| Centrifuge | 300 ml | MT2000 | 0.05% | Our flocculant A | 66 ml | 77.62% |
| Screw press | 300 ml | MT2000 | 0.05% | Our flocculant A | 66 ml | 67.92% |

As a result of adding Reselber MT2000 and polymer flocculant A (0.2% aqueous solution) and dewatering on the assumption of a centrifuge, the cake moisture content was 77.62%. Further, as a result of adding Reselber MT2000 and polymer flocculant A (0.2% aqueous solution) and dewatering on the assumption of a screw press machine, the cake moisture content was 67.92%. There was almost no leakage of SS into the separated liquid in the test on the assumption of a centrifuge, and a small amount of leakage in the test on the assumption of a screw press machine.

(3) Summary

With the Reselber dewatering, the cake moisture content in the test on the assumption of a centrifuge was 77.62%, and dewatering to 75% or less by the centrifuge was considered impossible due to a low dewatering pressure. Further, in the test on the assumption of a screw press machine, the cake moisture content was 67.92%, and it was determined that dewatering to 75% or less was possible with the screw press machine.

Example 8

In this example, the dewatering treatment of a liquid digestate generated in a biomass power generation facility was performed.
As a sample, a liquid digestate of biomass power generation [sludge before solid-liquid separation; TS (solid matter) concentration: 4.36%, pH: 7.51, appearance: black turbid, odor: nitrification odor, sludge after solid separation; TS (solid matter) concentration: 1.04%, pH: 8.14, appearance: brown, odor: nitrification odor] was used, and a dewatering treatment test of the liquid digestate was performed. There was a difference of 4 times or more between the TS (solid matter) concentration before and after solid-liquid separation.

(1) Selection of flocculant

The dewatering aid Reselber MT2000 was added to 100 ml of sludge, about 20 types of flocculants were added, compatibility between the Reselber and sludge was confirmed, and the reaction was confirmed in order to select the product number. The results are shown in Table 21. In the sludge before and after the solid-liquid separation, the compatible flocculant had the same product number. There was a difference of 1.6 times between the addition amount of flocculant in the sludge before and after solid-liquid separation.

[Table 21]

| Specimen name | Flocculant(1) | | Flocculant(2) | | Floc determination | | | | Overall evaluation |
|---|---|---|---|---|---|---|---|---|---|
| | Product | Addition amount | Product | Addition amount | Supernatant liquor | Size | Hardness | Tightness | |
| Sludge before solid-liquid separation | Our flocculant A | 68 ml | - | - | A | A | B to B+ | B to B+ | |
| Sludge after solid-liquid separation | Our flocculant A | 43 ml | - | - | A | A- to A | B- to B | B- to B | |

(2) Dewatering test

Reselber (MT2000) was added at an addition ratio of 0.05% (vs. wastewater volume) to the sludge, and the polymer flocculant A was added to form flocs. The flocs were then put into a dewatering tester (pressurization area 81 cm$^2$, pressure/holding time variable), a dewatering test was performed, and the moisture content of the discharged dewatered cake was measured. The dewatering pressure and holding time were set to 480 kPa and 5 min on the assumption of a screw press dewatering machine. The results are shown in Table 22.

[Table 22]

| Specimen name | Amount of sludge to be dewatered | Reselber | | Flocculant (1) | | Flocculant (2) | | Cake moisture content |
|---|---|---|---|---|---|---|---|---|
| | | Product number | Addition ratio | Product number | Addition amount | Product number | Addition amount | |
| Sludge before solid-liquid separation | 500 ml | MT2000 | 0.05% | Our flocculant A | 340 ml | | | 69.01% |
| Sludge after solid-liquid separation | 700 ml | MT2000 | 0.05% | Our flocculant A | 300 ml | | | 73.88% |

(Sludge before solid-liquid separation)

As a result of adding Reselber MT2000 and 340 ml of polymer flocculant A (0.2% aqueous solution) to 500 ml of sludge and dewatering on the assumption of a screw press machine, the cake moisture content was 69.01%.

(Sludge after solid-liquid separation)

As a result of adding Reselber MT2000 and 300 ml of polymer flocculant A (0.2% aqueous solution) to 700 ml of sludge and dewatering on the assumption of a screw press machine, the cake moisture content was 73.88%.

(3) Water quality analysis

Water quality analysis of raw wastewater (water before dewatering) and separated liquid in dewatering test was performed. T-N was determined by a public institution, and BOD was determined with a BOD meter. The results are shown in Table 23.

[Table 23]

| Specimen name | | BOD | T-N |
|---|---|---|---|
| After solid-liquid separation | Raw water (water before dewatering) | 1320 mg/l | 2000 mg/l |
| | Separated liquid in Reselber dewatering | 480 mg/l | 1300 mg/l |
| | Removal ratio | 63.6% | 35.0% |
| Before solid-liquid separation | Raw water (water before dewatering) | 2420 mg/l | |
| | Separated liquid in Reselber dewatering | 400 mg/l | |
| | Removal ratio | 83.5% | |

(Sludge before solid-liquid separation)

Here, 63.6% of BOD was removed to 480 mg/l by the Reselber dewatering. T-N remained at a removal rate of 35%. Most of the remaining nitrogen was considered ammoniacal nitrogen.

(Sludge after solid-liquid separation)

Here, 83.5% of BOD was removed to 400 mg/l by the Reselber dewatering.

(4) Summary

Since the Reselber dewatering treatment reduced BOD to 1/3, it became clear that the planned installation capacity of the biological treatment tank (aeration tank) can be 1/3 that in the case where the raw water is treated as is. In addition, it was found that after the cake moisture content has reached the first half of 70%, subsequent treatment can be easily performed, and planning of composting and industrial waste disposal is facilitated.

Example 9

In this example, a liquid digestate (high concentration) of biomass power generation was used, and the dewatering treatment of the liquid digestate was performed.

As a sample, a liquid digestate of biomass power generation [properties of wastewater; TS (solid matter) concentration: 81.17%, pH: 8.05, appearance: dark brown, odor: low nitrification odor] was used. The TS (solid matter) concentration was very high at 8%, and in subsequent tests, a 2-fold diluted sample was used.

(1) Dewatering test

The dewatering aid Reselber (MT2000) was added at an addition ratio of 0.05% (vs. wastewater volume) to 300 ml of wastewater, and the flocculant A or B was added to form flocs. The flocs were then put into a dewatering tester (pressurization area 81 cm$^2$, pressure/holding time variable), a dewatering test was performed, and the moisture content of the discharged dewatered cake was measured. The dewatering pressure and holding time were set to 480 kPa and 5 min on the assumption of a screw press dewatering machine. The results are shown in Table 24.

[Table 24]

| Reselber | | Flocculant (1) | | Flocculant (2) | | Flocculant (3) | | Cake moisture content |
|---|---|---|---|---|---|---|---|---|
| Product number | Addition ratio | Product number | Addition amount | Product number | Addition amount | Product number | Addition amount | |
| MT2000 | 0.05% | Our flocculant A | 60 ml | Flocculant B of this firm | 120 ml | | | 61.10% |

As a result of adding Reselber MT2000, the flocculant A in an addition amount of 60 ml (0.5% aqueous solution), and the flocculant B in an addition amount of 120 ml (0.2% aqueous solution) and dewatering on the assumption of a screw press machine, the cake moisture content was 61.1%.

(2) Water quality analysis

BOD measurement of raw wastewater (water before dewatering) and separated liquid in the dewatering test was performed using a BOD meter. The results are shown in Table 25.

In the Reselber dewatering, 82.2% of BOD was removed to 535 mg/l. According to visual confirmation, SS was almost removed. The dilution ratio of the raw water was preferably 2 times or more. In the Reselber dewatering treatment, the cake moisture content was 61.1% and 82.2% of BOD was removed to 535 mg/l.

[Table 25]

| Specimen name | BOD |
|---|---|
| Raw wastewater (water before dewatering) | 3010 mg/l |
| Separated liquid in Reselber dewatering (water after dewatering) | 535 mg/l |
| Removal ratio | 82.2% |

Example 10

In this example, a test was conducted to see how much the BOD and SS concentrations could be lowered and how much the cake moisture content could be lowered by subjecting the biomass liquid digestate to Reselber dewatering treatment. Fig. 4 schematically shows an example of the Reselber dewatering system used in this example. In the figure, a floc separator is shown as an option.

As the wastewater of the sample to be treated, a biomass liquid digestate [sample properties; TS (solid matter) concentration: 4.17%, pH: 7.50, appearance: dark brown, odor: nitrification odor] was used, and a dewatering test and a water quality analysis test of the sample were conducted.

(1) Dewatering test

The dewatering aid Reselber (MT2000) was added at 0.30% (vs. wastewater volume) to 500 ml of wastewater, and 150 ml of flocculant A (0.5% aqueous solution) in an amount of and 350 ml of flocculant B (0.2% aqueous solution) were added to form flocs. A water quality analysis test of the later stage was performed for the water fraction as desorbed water, the solid matter was put into a dewatering tester (pressurization area 81 m$^2$, pressure/holding time variable), a dewatering test was performed, and the moisture content of the discharged dewatered cake was measured. The dewatering pressure and holding time were set to 480 kPa and 5 min on the assumption of a screw press dewatering machine. The results are shown in Table 26.

[Table 26]

| No. | Reselber | | Flocculant (1) | | Flocculant (2) | | Flocculant (3) | | Cake moisture content |
|---|---|---|---|---|---|---|---|---|---|
| | Product number | Addition ratio | Product number | Addition amount | Product number | Addition amount | Product number | Addition amount | |
| 1 | MT2000 | 0.10% | Flocculant A | 150 ml | Flocculant B | 350 ml | | | 71.95% |

As shown in the table, as a result of adding Reselber MT2000, adding the flocculants A and B, and dewatering, the cake moisture content was 71.95%. The addition amount of the flocculant varies depending on the biomass raw material, but in the case of a biomass liquid digestate derived from cow dung and chicken dung, the addition amount tends to increase.

(2) Water quality analysis test

The measurement of BOD, SS (suspended substance), phosphorus, and nitrogen in raw wastewater (water before dewatering) and the dewatered liquid in the dewatering test was performed by a public institution (environmental measurement agency). The results are shown in Table 27.

[Table 27]

| Specimen name | BOD | SS |
|---|---|---|
| Raw wastewater (water before dewatering) | 4300 mg/l | 26,000 mg/l |
| Separated liquid in Reselber dewatering (water after dewatering) | 410 mg/l | 25 mg/l |
| Removal ratio | 90.5% | 99.9% |

Here, 90.5% of BOD of the raw wastewater (water before dewatering) was removed, the BOD of the dewatered separated liquid changed from 4300 mg/l to 410 mg/l, and it was confirmed that excellent Reselber water treatment effect was demonstrated. Further, 99% of the SS of the raw wastewater (water before dewatering) was removed, the SS of the dewatered separated liquid changed from 26,000 mg/l to 25 mg/l, and was confirmed that excellent Reselber water treatment effect was also demonstrated in this respect.

By the Reselber dewatering, 90.5% of BOD of the raw wastewater (water before dewatering) was removed, and 99.9% of SS of the Reselber separated liquid was removed to 25 mg/l. Moreover, the cake moisture content was a low value of 71.95%. From these values, it was confirmed that the Reselber dewatering of the biomass liquid digestate can be performed with high efficiency in both dewatering and water treatment performance.

(3) Summary

It was confirmed that the moisture content of the dewatered cake was lowered to 75% to 65% by the Reselber dewatering treatment, and the moisture content could be freely set by increasing/decreasing the addition amount of Reselber. According to the water quality analysis test of the Reselber-dewatered separated liquid, 95% on average of phosphorus in the Reselber-dewatered separated liquid was removed, 95% on average of SS (suspended substance) was removed, 60% on average of BOD was removed, and 60% on average of nitrogen was removed. It was confirmed that the dewatering system using Reselber can be used as a water recycling technique in a water treatment system.

Example 11

In this example, the liquid digestate generated in biomass power generation was tested for how much BOD can be lowered and how much the cake dewatering ratio can be lowered by subjecting the liquid digestate to the Reselber dewatering treatment. A Reselber dewatering system similar to the Reselber dewatering system used in Example 7 was used.

(1) Dewatering test

The dewatering aid Reselber (MT2000) and 90 ml of the polymer flocculant A (0.2% aqueous solution) were added to 500 ml of sludge to form flocs. The flocs were put into a dewatering tester (pressurization area 81 cm$^2$, pressure/holding time variable), a dewatering test was performed, and the moisture content of the discharged cake was measured. The dewatering pressure and holding time were set to 480 kPa and 5 min on the assumption of a screw press dewatering machine. The results are shown in Table 28.

[Table 28]

| Reselber | | Flocculant (1) | | Flocculant (2) | | Flocculant (3) | | Cake moisture content |
|---|---|---|---|---|---|---|---|---|
| Product number | Addition ratio | Product number | Addition amount | Product number | Addition amount | Product number | Addition amount | |
| MT2000 | 0.30% | Our flocculant A | 90 ml | - | - | - | - | 72.75% |

As shown in the table, as a result of adding 0.30% (vs. wastewater volume) of Reselber MT2000 and 90 ml of polymer flocculant A (0.2% aqueous solution) and performing dewatering on the assumption of a screw press machine, the cake moisture content was 72.75%.

(2) Water quality analysis test

The measurement of the raw wastewater (water before dewatering) and the separated liquid obtained in the dewatering test was performed using a BOD meter (Central Kagaku Corp., OxiTop System). The results are shown in Table 29. The Reselber dewatering reduced the BOD of 6920 mg/l of the raw wastewater (water before dewatering) by half to the BOD of 3450 mg/l of the Reselber-dewatered separated liquid (water after dewatering).

[Table 29]

| Specimen name | BOD |
|---|---|
| Raw wastewater (water before dewatering) | 6920 mg/l |
| Separated liquid in Reselber dewatering (water after dewatering) | 3450 mg/l |

It was confirmed that by reducing by half the BOD of raw wastewater (water before dewatering) by the Reselber dewatering treatment, the volume of the biological treatment tank (aeration tank) planned by design became half that in the case where the raw water is treated as is. In addition, it was found that after the cake moisture content reaches the first half of 70%, subsequent treatment can be easily performed, and planning of composting and industrial waste disposal is facilitated.

(3) Summary

It was confirmed that the moisture content of the dewatered cake was lowered to 75% to 65% by the dewatering treatment. According to the water quality analysis test of the Reselber-dewatered separated liquid, 95% on average of phosphorus was removed, 95% on average of SS (suspended substance) was removed, 60% on average of BOD was removed, and 60% on average of nitrogen was removed. It was confirmed that the Reselber dewatering system can be used as a recycling technique in a water treatment system.

Example 12

In this example, the liquid digestate of biomass power generation was subjected to dewatering treatment to measure the cake moisture content and perform a water quality analysis test of the Reselber-dewatered separated liquid.
In this example, sludge [sludge properties; TS (solid matter) concentration: 2.73%, pH: 7.63, appearance: dark black brown color, smell: low rot odor] was used, and the sludge dewatering test and water quality analysis [phosphorus, SS (suspended substance), BOD, nitrogen] of the Reselber-dewatered separated liquid were performed. Fig. 2 schematically shows an example of the reseller dewatering system plant used in this example.

(1) Dewatering test

The dewatering aid Reselber (MT2000) was added at 0.10% (vs. sludge volume) and a polymer flocculant (0.2% aqueous solution) was added to 800 ml of sludge to form flocs. The flocs were put into a dewatering tester (pressurization area 81 cm$^2$, pressure/holding time variable), a dewatering test was performed, and the moisture content of the discharged cake was measured. The dewatering pressure and holding time were set to 480 kPa and 5 min on the assumption of a screw press dewatering machine. The results are shown in Table 30.

[Table 30]

| No. | Reselber | | Flocculant (1) | | Flocculant (2) | | Flocculant (3) | | Cake moisture content |
|---|---|---|---|---|---|---|---|---|---|
| | Product number | Addition ratio | Product number | Addition amount | Product number | Addition amount | Product number | Addition amount | |
| 1 | MT2000 | 0.10% | Existing product | 100 ml (1.5% vs. TS) | - | - | - | - | 72.11% |

As shown in the table, as a result of adding 0.1% of Reselber MT2000 and 100 ml (1.5% vs. TS) of the polymer flocculant (existing product) and dewatering on the assumption of a screw press, the cake moisture content was 72.11%. Although the original sludge could be easily dewatered, it was confirmed that the addition of Reselber almost eliminates SS leakage and leads to subsequent advancement of fermentation. As a result of adding Reselber and dewatering, the moisture content of the cake was 72.11%, and it was confirmed that further reduction was possible by increasing the addition amount.

(2) Water quality analysis test

A water quality analysis test of the Reselber-dewatered separated liquid was conducted. The resultant dewatering effect was that 95% on average of phosphorus was removed, 95% on average of SS (suspended substance) was removed, 60% on average of BOD was removed, and 60% on average of nitrogen was removed. It was confirmed that the moisture content can be freely set by increasing or decreasing the Reselber addition amount. It was confirmed that the Reselber dewatering system can be used as a recycling technique in a water treatment system.

Example 13

In this example, it was investigated how much the cake moisture content can be reduced by the sludge dewatering treatment of ink washing wastewater.

In this example, ink washing wastewater sludge [sludge properties; TS (solids concentration): 0.45%, pH: 6.24, appearance: black turbid, slightly transparent color, odor: mineral oily odor] was used, and the Reselber dewatering test and water quality analysis test [phosphorus, SS (suspended substance), BOD, nitrogen] of the Reselber-dewatered separated liquid were performed.

(1) Dewatering test

The dewatering aid Reselber (MT2000) was added at 0.3% (vs. sludge volume) to 800 ml of sludge and the polymer flocculant A (0.2% aqueous solution) was added at 75 ml to form flocs. The flocs were put into a dewatering tester (pressurization area 81 $cm^2$, pressure/holding time variable), and the moisture content of the discharged cake was measured. The dewatering pressure and holding time were set to 960 kPa and 10 min on the assumption of a filter press dewatering machine, and 480 kPa and 5 min on the assumption of a screw press machine. The results of the dewatering test are shown in Table 31.

[Table 31]

| Assumed dewatering machine | Reselber | | Flocculant (1) | | Flocculant (2) | | Flocculant (3) | | Cake moisture content |
|---|---|---|---|---|---|---|---|---|---|
| | Product number | Addition ratio | Product number | Addition amount | Product number | Addition amount | Product number | Addition amount | |
| Filter press | MT2000 | 0.3% | Our flocculant A | 75 ml | - | - | - | - | 72.74% |
| Screw press | MT2000 | 0.3% | Our flocculant A | 75 ml | - | - | - | - | 77.54% |

As shown in the table, as a result of adding Reselber MT2000 and the polymer flocculant A and dewatering on the assumption of a filter press, the cake moisture content was 72.74%. As a result of dewatering on the assumption of a filter press, the cake moisture content was 77.54%. Because of the Reselber dewatering, the cake moisture content was 72.74% to 77.54% and was reduced by 15% to 20% or more from the current level. This reduced the dewatered cake amount to 1/3 of the current level.

(2) Dewatering effect

It was confirmed that the moisture content can be freely set by increasing or decreasing the Reselber addition amount, and the following water treatment effect was also confirmed: 95% on average of phosphorus was removed, 95% on average of SS (suspended substance) was removed, 60% on average of BOD was removed, and 60% on average of nitrogen was removed. It was confirmed that the Reselber dewatering system can be used as a recycling technique in a water treatment system.

[Industrial Applicability]

As described in detail above, the present invention relates to a method of treating parlor wastewater/biomass liquid digestate and a device for treating water for same, and has the following industrial applicability. 1) In the present invention, the attention is focused on fats and calcium contained in parlor wastewater including washing water and disinfectant of milking equipment, water washed away from the floor of the milking facility, washing drainage, cow manure, milk waste, and the like, in particular, the milk waste, in order to remove the fats and calcium efficiently before the fats and calcium flow into an aeration tank, a specific dewatering aid having a Mp value of Mp $\leq$ 70, more specifically Mp $\leq$ 55 to Mp = 55 to 70 and a flocculant are used in combination so that the formation of flocs including the fats and calcium contained in the milk waste, floc removal/dewatering and neutralization of disinfectant in the neutralization tank are performed simultaneously, thereby making it possible to implement the biological treatment in the biological treatment tank (aeration tank); 2) By using the specific dewatering aid and the flocculant in combination, it is possible to drain the parlor wastewater in a form that satisfies the general drainage standards established by the Water Pollution Control Law; 3) the dewatered cake generated as a residue can be reused in composting facilities; and 4) a method for efficiently biologically treating parlor wastewater and a wastewater treatment device (facility) therefor can be provided. Further, in the present invention, 5) the attention is focused, in particular, on an emulsified component and a fine particle component contained in a biomass liquid digestate, in order to remove the emulsified component and the fine particle component efficiently before the emulsified component and the fine particle component flow into an aeration tank, a specific dewatering aid having a Mp value (moisture content evaluation) of Mp (cake moisture content) $\leq$ 70, more specifically, Mp (cake moisture content) $\leq$ 55 to Mp (cake moisture content) = 55 to 70 and a flocculant are used in combination so that the formation of flocs including the emulsified component and the fine particle component contained in the biomass liquid digestate and floc removal/dewatering are performed, thereby making it possible to implement the biological treatment in the biological treatment tank (aeration tank); 6) by using the specific dewatering aid and the flocculant in combination, it is possible to drain the biomass liquid digestate in a form that satisfies the general drainage standards established by the Water Pollution Control Law; 7) it is possible to provide a method for efficiently biologically treating a biomass liquid digestate and a wastewater treatment device (facility) therefor; 8) the present invention enables separation into the separated liquid from which extra-large ($\phi$ 10 mm or more) to large ($\phi$ 5 to 10 mm) flocs have been removed and a dewatered cake with a moisture content of 70% or less, more specifically, a moisture content of 55% or less to 55% to 70%, and 78% or less of BOD of the raw water can be removed; and 9) a stable water treatment effect can be expected by reducing the BOD volume load, reducing the amount of generated sludge, and reducing the amount of required oxygen.

**Claims**

1. A method for treating wastewater, comprising the steps of:

   adding a specific dewatering aid having a Mp value (Moisture percentage value) of Mp (cake moisture content) $\leq$ 55 to Mp (cake moisture content) = 55 to 70 and a flocculant having a floc (Flock: floc-like precipitate) forming ability to wastewater, which is water to be treated, to form extra-large ($\phi$ 10 mm or more) to large ($\phi$ 5 to 10 mm) flocs;
   separating the wastewater into separated liquid from which the flocs have been removed and a dewatered cake with a moisture content of 55% or less to 55% to 70%; and
   then, loading the separated liquid into a biological treatment tank (aeration tank) to perform biological treatment.

**2.** The method for treating wastewater according to claim 1, wherein the wastewater is parlor wastewater or biomass liquid digestate.

**3.** The method according to claim 2, in a purification facility equipped with at least a mixing tank, a reaction tank, a sludge dewatering machine, (a neutralization tank), and a biological treatment tank, the method comprising the steps of:

in the mixing tank, adding the specific dewatering aid to the parlor wastewater/biomass liquid digestate, which is the water to be treated;
then, in the reaction tank, adding the flocculant having the floc forming ability to the water to be treated to form extra-large (φ 10 mm or more) to large (φ 5 to 10 mm) flocs including fats and calcium contained in milk waste/flocs including an emulsified component and a fine particle component contained in the biomass liquid digestate;
in the sludge dewatering machine, removing the flocs and simultaneously separating the parlor wastewater/biomass liquid digestate into separated liquid from which the flocs have been removed and a dewatered cake with a moisture content of 55% or less to 55% to 70%; and
then, loading the separated liquid into the biological treatment tank (aeration tank) to perform biological treatment.

**4.** The method according to any one of claims 2 to 3, comprising the steps of:

adding a dewatering aid having a Mp value (moisture content evaluation) of Mp (cake moisture content) = 55 to 70 and a flocculant having a floc forming ability to form large (φ 5 to 10 mm) flocs;
separating into separated liquid from which the flocs have been removed and a dewatered cake having a moisture content of 55% to 70%; and
then, loading the separated liquid into the biological treatment tank (aeration tank) to perform biological treatment.

**5.** The method according to any one of claims 2 to 4, wherein an operation of removing the flocs including fats and calcium contained in the milk waste/flocs including an emulsified component and a fine particle component contained in the biomass liquid digestate is performed before the water to be treated flows into the biological treatment tank.

**6.** The method according to any one of claims 2 to 4, wherein an operation of neutralizing a disinfectant is performed in the neutralization tank, if necessary, before the water to be treated flows into the biological treatment tank (aeration tank).

**7.** The method according to any one of claims 2 to 4, wherein the dewatering aid is added at 0.1% or less (vs. wastewater volume) to the parlor wastewater/biomass liquid digestate, which is the water to be treated, in the mixing tank.

**8.** The method according to any one of claims 2 to 4, wherein the flocculant is added at 1% or less (0.2% aqueous solution) to the parlor wastewater/biomass liquid digestate, which is the water to be treated, in the reaction tank.

**9.** A device for treating wastewater for use in the method for treating wastewater according to any one of claims 1 to 8, the device including, as a constituent component, a purification facility equipped with at least a mixing tank, a reaction tank, a sludge dewatering machine, (a neutralization tank), and a biological treatment tank, wherein the following steps:

1) in the mixing tank, adding a dewatering aid having a Mp value (moisture content evaluation) of Mp (cake moisture content) ≤ 55 to Mp (cake moisture content) = 55 to 70 to parlor wastewater/biomass liquid digestate, which is water to be treated;
2) in the reaction tank, adding a flocculant having a floc forming ability to the water to be treated to form extra-large (φ 10 nm or more) to large (φ 5 to 10 mm) flocs including fats and calcium contained in the milk waste/flocs including an emulsified component and a fine particle component contained in the biomass liquid digestate; and
3) in the sludge dewatering machine, separating into separated liquid from which the flocs have been removed and a dewatered cake with a moisture content of 55% or less to 55% to 70%
are performed, thereby loading the separated liquid into the biological treatment tank (aeration tank) to perform biological treatment.

**10.** The device for treating wastewater according to claim 9, wherein the following steps:

1) in the mixing tank, adding a dewatering aid having a Mp value (moisture content evaluation) of Mp (cake moisture content) = 55 to 70 to parlor wastewater/biomass liquid digestate, which is water to be treated;

2) in the reaction tank, adding a flocculant to the water to be treated to form large ($\phi$ 5 to 10 mm) flocs including fats and calcium contained in the milk waste/flocs including an emulsified component and a fine particle component contained in the biomass liquid digestate; and

3) in the sludge dewatering machine, separating into separated liquid from which the flocs have been removed and a dewatered cake with a moisture content of 55% to 70%

are performed, thereby loading the separated liquid into the biological treatment tank (aeration tank) to perform biological treatment.

TREATMENT FLOW SHEET

```
                          ┌─────────────────────┐
                          │   PARLOR BUILDING   │
                          └─────────────────────┘
                                     │
                                     ▼
                          ┌─────────────────────┐
                     ────▶│   RAW WATER TANK    │
                    │     └─────────────────────┘
                    │                │
                    │                ▼
RESELBER ──────────┼────▶┌─────────────────────┐
                    │     │     MIXING TANK     │
                    │     └─────────────────────┘
                    │                │
                    │                ▼
FLOCCULANT ────────┼────▶┌─────────────────────┐
                    │     │    REACTION TANK    │
                    │     └─────────────────────┘
                    │                │
                    │                ▼
                    │  ┌──────────────────────────────┐
                    │  │  SLUDGE DEWATERING MACHINE   │───▶  DEWATERED CAKE·
                    │  └──────────────────────────────┘      TO COMPOSTING FACILITY
(EXCESS SLUDGE)     │                │
                    │                ▼
                    │       ┌─────────────────────┐
                    │       │   ADJUSTMENT TANK   │
                    │       └─────────────────────┘
                    │                │
                    │                ▼
                    │     ┌─────────────────────────┐
                    │     │   NEUTRALIZATION TANK   │
                    │     └─────────────────────────┘
(SLUDGE RETURN)     │                │
                    │                ▼
                    │  ┌───────────────────────────────┐
                    └─▶│   BIOLOGICAL TREATMENT TANK   │
                       └───────────────────────────────┘
                    │                │
                    │                ▼
                    │  ┌───────────────────────────────┐
                    ◀──│   MEMBRANE TREATMENT TANK     │
                    │  └───────────────────────────────┘
                    │                │
                    │                ▼
                    │     ┌─────────────────────────┐
                    ◀─────│    TREATED WATER TANK   │
                          └─────────────────────────┘
                                     │
                                     ▼
                          ┌─────────────────────┐
                          │      DRAINAGE       │
                          └─────────────────────┘
```

F i g. 1

## AERATION TANK INSTALLATION CONDITIONS AND EFFECTS

(UNIT:$m^3$ )

NECESSARY AERATION TANK VOLUME
(VOLUME LOAD 0.8 kg BOD/m3)

SLUDGE GENERATION AMOUNT
(CONVERSION RATIO 40%)

REQUIRED OXYGEN AMOUNT

285

61.5

18

4

606

130

▩ NO PRETREATMENT     ▩ RESELBER DEWATERING

# F i g . 2

## AERATION TANK INSTALLATION CONDITIONS AND EFFECTS

UNIT (m³)

2500

2400
2100
1800
1500
1200
900    768
600
300       168      49
0                    10

550

NECESSARY AERATION TANK VOLUME    SLUDGE GENERATION AMOUNT    REQUIRED OXYGEN AMOUNT
(VOLUME LOAD 0. 8 kg BOD/m3)    (CONVERSION RATIO 40%)

◾ NO PRETREATMENT      ◾ RESELBER DEWATERING

F i g. 3

RESELBER SUPPLY MACHINE

RESELBER

OPTIONAL

FLOC SEPARATOR

FLOCS

SLUDGE,

WASTEWATER

FLOCCULANT

SEPARATED
LIQUID

SOLID FRACTION

SCREW PRESS
DEWATERING MACHINE

MECHANOCHEMICAL      MECHANOCHEMICAL
REACTION TANK(1)    REACTION TANK(2)

SEPARATED LIQUID   DEWATERED CAKE

F i g .  4

RESELBER SUPPLY MACHINE

DEWATERING AID RESELBER

SLUDGE.
WASTEWATER

POLYMER FLOCCULANT

SCREW PRESS
DEWATERING MACHINE

MIXING TANK REACTION
TANK

(MIXING REACTION TANK)

SEPARATED LIQUID    DEWATERED CAKE

F i g . 5

RAW WATER INFLOW 70.0 m3/DAY

RAW WATER TANK ⓟ ══════ 140.0 m³/DAY ═══════► METERING TANK

ADJUSTMENT TANK ◄──────

ⓟ

METERING TANK

BIOLOGICAL TREATMENT TANK

MEMBRANE TREATMENT TANK ⓟ

ⓟ

TREATED WATER TANK

DISINFECTED OUTFLOW TANK

OUTFLOW 140.0 m³/DAY

MIXING TANK

REACTION TANK

FLOC SEPARATOR

ⓟ

SCREW PRESS DEWATERING MACHINE

DEWATER CAKE IS CARRIED OUT

F i g .   6

<div align="center">

**INTERNATIONAL SEARCH REPORT**

</div>

| International application No. |
|---|
| PCT/JP2018/018404 |

**A.  CLASSIFICATION OF SUBJECT MATTER**
Int.Cl. B01D21/01(2006.01)i, C02F1/52(2006.01)i, C02F3/02(2006.01)i,
        C02F11/12(2006.01)i

According to International Patent Classification (IPC) or to both national classification and IPC

**B.  FIELDS SEARCHED**

Minimum documentation searched (classification system followed by classification symbols)
Int.Cl. B01D21/01, C02F1/52, C02F3/02, C02F11/12

Documentation searched other than minimum documentation to the extent that such documents are included in the fields searched
Published examined utility model applications of Japan      1922–1996
Published unexamined utility model applications of Japan    1971–2018
Registered utility model specifications of Japan            1996–2018
Published registered utility model applications of Japan    1994–2018

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | JP 2006-297229 A (DAIYANITORIKKUSU KK) 02 November 2006, claims, paragraphs [0010]–[0031] (Family: none) | 1–10 |
| Y | WO 2006/022188 A1 (MIURA, Seihachiro) 02 March 2006, claims, paragraphs [0023]–[0046] & JP 4189479 B2 & US 2008/0020929 A1, claims, paragraphs [0028]–[0067] & EP 1810748 A1 & KR 10-2006-0039449 A & CN 101005891 A | 1–10 |

☒  Further documents are listed in the continuation of Box C.  ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 July 2018 (13.07.2018) | 24 July 2018 (24.07.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT

| International application No. |
| --- |
| PCT/JP2018/018404 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2005-248337 A (MIURA, Seihachiro) 15 September 2005, claims, paragraphs [0024]-[0027], fig. 4, 5 (Family: none) | 1-20 |
| Y | JP 2006-87968 A (MATSUSHITA ELECTRIC INDUSTRIAL CO., LTD.) 06 April 2006, claims, paragraph [0001] (Family: none) | 2-20 |
| Y | JP 2003-145199 A (FUJI ELECTRIC CO., LTD.) 20 May 2003, claims, paragraphs [0001]-[0009] (Family: none) | 2-20 |
| Y | JP 5-38495 A (HITACHI CHEMICAL INDUSTRY CO., LTD.) 19 February 1993, claims, paragraph [0010] (Family: none) | 6 |
| A | JP 2013-233519 A (ISHIGAKI COMPANY, LTD.) 21 November 2013, entire text (Family: none) | 1-10 |
| A | JP 56-13099 A (NICHIREKI CHEM IND CO., LTD.) 07 February 1981, entire text & US 4559143 A & GB 2058035 A & DE 3026187 A1 & FR 2460897 A1 | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0910508 B
- JP 2000154378 A
- JP 2003290604 A
- JP 2007075710 A
- JP 2010240582 A
- JP 2003088838 A
- JP 2005006649 A
- JP 2007313427 A
- JP 2008043902 A
- JP 2008221105 A
- JP 2012016652 A
- JP 2016010742 A

**Non-patent literature cited in the description**

- Waste Treatment/Recycling Technology Handbook. Construction Industry Research Committee, Inc, 25 November 1993, 407